# EUROPEAN PATENT SPECIFICATION

(11) **EP 2 924 594 B1**
(45) Date of publication and mention of the grant of the patent: **08.03.2017**
(21) Application number: 15160890.8
(22) Date of filing: 25.03.2015
(51) Int. Cl.: G06F 17/30

(54) **DATA ENCODING AND CORRESPONDING DATA STRUCTURE IN A COLUMN-STORE DATABASE**
DATENCODIERUNG UND ZUGEHÖRIGE DATENSTRUKTUR IN EINER DATENBANK MIT SPALTENSPEICHERUNG
CODAGE DE DONNÉES ET STRUCTURE DE DONNÉES CORRESPONDANTE DANS UNE BASE DE DONNÉES À COLONNES

(30) Priority: 25.03.2014 US 201414224308
(43) Date of publication of application: 30.09.2015
(73) Proprietor: SAP SE, 69190 Walldorf (DE)
(72) Inventor: El-Ali, Mohamad, 69190 Walldorf (DE)
(74) Representative: Richardt Patentanwälte PartG mbB

(56) References cited:
- EP-A1- 2 660 732
- EP-A2- 1 995 878
- US-A1- 2012 221 528
- David Schwalb ET AL: "Cache Conscious Column Organization in In-Memory Column Stores", , 31 December 2013 (2013-12-31), XP055198146, Retrieved from the Internet: URL:https://publishup.uni-potsdam.de/opus4 -ubp/files/6256/tbhpi67.pdf [retrieved on 2015-06-24]
- VIVEK NARASAYYA ET AL: "Workload driven index defragmentation", DATA ENGINEERING (ICDE), 2010 IEEE 26TH INTERNATIONAL CONFERENCE ON, IEEE, PISCATAWAY, NJ, USA, 1 March 2010 (2010-03-01), pages 497-508, XP031657903, ISBN: 978-1-4244-5445-7
- "Defragmenting SQL Server Databases Defragmenting MES Databases Introduction", , 31 August 2013 (2013-08-31), XP055198272, Retrieved from the Internet: URL:http://www.qsystemsco.com/technote/Won derware MES/T0976.pdf [retrieved on 2015-06-25]
- CARSTEN BINNIG ET AL: "Dictionary-based order-preserving string compression for main memory column stores", PROCEEDINGS OF THE 35TH SIGMOD INTERNATIONAL CONFERENCE ON MANAGEMENT OF DATA, SIGMOD '09, 1 January 2009 (2009-01-01), page 283, XP055165746, New York, New York, USA DOI: 10.1145/1559845.1559877 ISBN: 978-1-60-558551-2
- VISHAL SIKKA ET AL: "Efficient transaction processing in SAP HANA database", PROCEEDINGS OF THE 2012 INTERNATIONAL CONFERENCE ON MANAGEMENT OF DATA, SIGMOD '12, 1 January 2012 (2012-01-01), pages 731-24, XP055197662, New York, New York, USA DOI: 10.1145/2213836.2213946 ISBN: 978-1-45-031247-9

## Description

### Technical field

This disclosure relates generally to data processing and, in particular, to advanced decoding and encoding of data in column-store databases.

### Background

Computing is typically governed by limitations to memory and processing speed. Enterprise computing, which includes enterprise resource planning (ERP), is an area of computing that integrates various organizational systems to facilitate production and transaction of goods and services. The applications for which business management software such as ERP is useful has been traditionally classified as involving either structured or unstructured data, and accordingly, ERP software has been adaptively designed for a particular broad category of data. However, ERP, customer relationship management (CRM), supplier relationship management (SRM), business intelligence (BI), and e-Commerce is becoming increasingly relevant to areas as diverse as sensor and feedback networks, real-time event analytics, social networking, cloud integration, mobile applications, and supply chain management. These varied applications demand analysis of both structured and unstructured data. To this end, systems such as SAP HANA® combine Online Transaction Processing (OLTP) and Online Analytical Processing (OLAP) for both structure and unstructured data, using hardware and database systems to create a single source of data, enable real-time analytics, and simplify applications and database structures.

Some ERP software improve computational speeds and efficiency even within existing memory and speeds limitations by using column-based data storage and in-memory database operators. One way to manipulate data in column-based data storage is by dictionary encoding. Dictionary encoding decreases space requirements, increases column scan speed, and can operate directly on compressed data. Dictionary encoding can be better organized with the aid of data structures such as attribute vectors, which assist in structuring and organizing data. However, inserting and deleting data can be expensive, because adding new values to the data store typically requires reorganization of dictionaries and attribute vectors.

In general, different auxiliary data structures like dictionaries, indexes (e.g. European patent application 14174779.0), or caches accelerate performance of databases, however these auxiliary structures consume resources as well. Thus resources of almost every database have to be properly shared between supporting the data stored in the database and the auxiliary structures, which facilitate access to the data.
The technical note 67 of the Hasso Plattner Institute for software systems engineering at the University of Potsdam "Cache Conscious Column Organization in In-Memory Column Stores" discloses in-memory column stores having data encoded using encoding dictionary. The encoding dictionary has a B+ Tree index. The publication "Workload Driven Index Defragmentation" discloses techniques relating to index defragmentation: a "what-if" analysis application programming interface (API) in the database engine for estimating the impact of defragmenting an index on I/O performance; range-level index defragmentation; formalization and hardness of the index defragmentation problem, and a scalable algorithm for the problem ("Workload Driven Index Defragmentation," International Conference on Data Engineering, 1 March 2010, p. 497).

### Summary

Appending, as understood here, is a procedure of adding a new data element to an ordered array of data elements as a last element of array, wherein in a case when the array is empty, i.e. does not contain any data elements, the new data element is added to the array as a first data element of the array.

An in-memory database, as understood here, is a database system that primarily or exclusively relies on main memory for computer data storage.

Main memory, as understood here, is physical memory that is internal to the computer. The word main is used to distinguish it from external mass storage devices such as disk drives. Another term for main memory is random access memory (RAM).

The disclosure generally describes an in-memory column-store database, wherein encoding and decoding dictionaries have a configuration, which facilitates access to data stored in the database and at the same time requires very little resources for operation of these dictionaries. The disclosure further describes a method for operating such a database and a computer-readable media having an executable computer code stored thereon, which when executed by a computer processor controlling the database causes the processor to execute the method.

As it will be clearly seen from the description a disclosed configuration of the encoding and decoding dictionary and a method of data management in the database based on the configuration of these dictionaries enables optimum balance between performance boost of the database and allocation of additional resources, including memory, for the dictionaries.

It is an objective of embodiments of the invention to provide for a system configured to provide access to a database, a computer-implemented method for providing access to a database on the system, and a computer readable medium having stored thereon a computer executable program code for providing access to a database on the system. Advantageous embodiments are described in the dependent claims.

According to one embodiment, the present invention relates to an in-memory database system comprising a column-based database for storing data records comprising attribute values of attributes, the column-based database being stored in a main memory of the in-memory database system a digital storage medium storing processor-executable program code, and a computing device to execute the processor-executable program code in order to cause the computing device to execute the following steps of: storing, for each of the attributes, the attribute values of the each of the attributes as an attribute vector in the column-based database, wherein positions of the attribute values in the attribute vector are indicative of their respective access keys, wherein each of the data records comprises the attribute values which have the same access key, wherein each of the attribute vectors is stored as a separate contiguous data record in the main memory, wherein at least some of the attribute vectors are stored encoded in the column-based database, wherein each of the encoded attribute vectors is encoded using a respective encoding dictionary, wherein each of the encoding dictionaries comprises coding records, wherein each of the coding records comprises the attribute value and an identification value of the attribute value of the each of the encoding records, wherein the identification values are stored in the encoded attribute vectors in-stead of their respective attribute values; storing the encoding dictionaries in the main memory, wherein the coding entries in the encoding dictionaries are ordered according to their attribute values; and storing decoding dictionaries in the main memory, wherein each of the encoding dictionaries has the complementary decoding dictionary comprising the same coding entries as the each of the encoding dictionaries, wherein the coding entries in the decoding dictionaries are ordered according to their identification values.

The execution of the processor-executable program code further causes the computing device to execute the following steps in response to receiving by the computing device a request to execute an operation on the column-based database from a database user, wherein the request comprises an instruction to add a new data record to the column-based database: identifying matching attributes of attribute values of the new data record and of the attribute vectors; identifying the attribute vectors having the identified attributes, wherein each of the attribute values of the new data record is to be appended to the respective identified attribute vector; appending to the one of the encoding dictionaries and to the complimentary decoding dictionary of the one of the encoding dictionaries the coding entry comprising the identification value of the one of the attribute values and the one of the attribute values, wherein the identification value of the one of the attribute values is unique for the entire encoding dictionary to which it is added, if one of the encoding dictionaries is used for encoding of one of the identified attribute vectors to which one of the attribute values of the new data record is to be appended and the one of the encoding dictionaries does not comprise a coding entry comprising the identification value of the one of the attribute values and the one of the attribute values; identifying the identification value of the one of the attribute values in the respective coding entry of the one of the encoding dictionaries if one of the encoding dictionaries is used for encoding of one of the identified attribute vectors to which one of the attribute values of the new data record is to be appended and the one of the encoding dictionaries comprises a coding entry comprising the identification value of the one of the attribute values and the one of the attribute values; appending the identification value of the one of the attribute values to the one of the identified attribute vectors, if one of the encoding dictionaries is used for encoding of one of the identified attribute vectors to which one of the attribute values of the new data record is to be appended; and appending the one of the attribute values to the one of the identified attribute vectors if one of the encoding dictionaries is not used for encoding of one of the identified attribute vectors to which one of the attribute values of the new data record is to be appended.

According to one embodiment, the present invention relates to a computer-implemented method for operating an in-memory database sys-tem. The in-memory database comprises: a column-based database for storing data records comprising attribute values of attributes, the column-based database being stored in a main memory of the in-memory database system, a digital storage medium storing processor-executable program code, and a computing device to execute the processor-executable program code in order to cause the computing device to perform the computer-implemented method, the computer-implemented method comprising the following steps: storing, for each of the attributes, the attribute values of the each of the attributes as an attribute vector in the column-based database, wherein positions of the attribute values in the attribute vector are indicative of their respective access keys, wherein each of the data records comprises the attribute values which have the same access key, wherein each of the attribute vectors is stored as a separate contiguous data record in the main memory, wherein at least some of the attribute vectors are stored encoded in the column-based database, wherein each of the encoded attribute vectors is encoded using a respective encoding dictionary, wherein each of the encoding dictionaries comprises coding records, wherein each of the coding records comprises the attribute value and an identification value of the attribute value of the each of the encoding records, wherein the identification values are stored in the encoded attribute vectors in-stead of their respective attribute values; storing the encoding dictionaries in the main memory, wherein the coding entries in the encoding dictionaries are ordered according to their attribute values; and storing decoding dictionaries in the main memory, wherein each of the encoding dictionary has the complimentary decoding dictionary comprising the same coding entries as the each of the encoding dictionaries, wherein the coding entries in the decoding dictionaries are ordered according to their identification values.

The execution of the processor-executable program code further causes the computing device to execute the following steps in response to receiving by the computing device a request to execute an operation on the column-based database from a database user, wherein the request comprises an instruction to add a new data record to the column-based database: identifying matching attributes of attribute values of the new data record and of the attribute vectors; identifying the attribute vectors having the identified attributes, wherein each of the attribute values of the new data record is to be appended to the respective identified attribute vector; appending to the one of the encoding dictionaries and to the complimentary decoding dictionary of the one of the encoding dictionaries the coding entry comprising the identification value of the one of the attribute values and the one of the attribute values, wherein the identification value of the one of the attribute values is unique for the entire encoding dictionary to which it is added, if one of the encoding dictionaries is used for encoding of one of the identified attribute vectors to which one of the attribute values of the new data record is to be appended and the one of the encoding dictionaries does not comprise a coding entry comprising the identification value of the one of the attribute values and the one of the attribute values; identifying the identification value of the one of the attribute values in the respective coding entry of the one of the encoding dictionaries if one of the encoding dictionaries is used for encoding of one of the identified attribute vectors to which one of the attribute values of the new data record is to be appended and the one of the encoding dictionaries comprises a coding entry comprising the identification value of the one of the attribute values and the one of the attribute values; appending the identification value of the one of the attribute values to the one of the identified attribute vectors, if one of the encoding dictionaries is used for encoding of one of the identified attribute vectors to which one of the attribute values of the new data record is to be appended; and appending the one of the attribute values to the one of the identified attribute vectors if one of the encoding dictionaries is not used for encoding of one of the identified attribute vectors to which one of the attribute values of the new data record is to be appended.

According to one embodiment, the present invention relates to a computer readable medium having stored thereon a computer executable program code for execution by a computer processor controlling a computing device of an in-memory database system, wherein execution of the instructions of the executable program code causes the computer processor controlling the computing device to perform the aforementioned computer-implemented method on the in-memory database system.

Using pairs of the encoding and the complementary decoding dictionaries comprising the same coding entries, wherein each of the coding entries comprises the attribute value and its respective identification value used for encoding of said attribute value, enables performing changes in the database, such as adding or deleting of a data record in the database, without burden of recoding of the respective data vectors, when only one one-dimensional dictionary is used for coding the attribute vector. This advantage will be further discussed in greater details. Moreover the aforementioned embodiments describe update of the column-store database at logical level.

In another embodiment the attributes have assigned data types being indicative of a data type of the attribute values of the respective attribute vector, wherein at least some of the encoded attribute vectors comprising the encoded attribute values of the attributes to which the same data type is assigned, are encoded using the same encoding dictionary.

This feature enables effective utilization of dictionaries. The attribute vectors may comprise attribute values of similar origin. For instance one attribute vector can comprise first names of people and another attribute vector comprise second names of people. Since a variety of the first names and a variety of the second names are very similar, an optimal solution would be to use one pair of encoding and decoding dictionaries for encoding/decoding of these attribute vectors.

In another embodiment, the execution of the processor-executable program code further causes the computing device to execute the following steps in response to receiving by the computing device a request to execute an operation on the column-based database from a database user, wherein the request comprises an instruction to retrieve from the column-based database all data records comprising an attribute value specified in the request: executing a set of steps if one of the encoding dictionary comprises the specified attribute value; identifying all of the attribute vectors comprising the specified attribute value and all of the access keys of the specified data value in all of the identified attribute vectors comprising the specified attribute value if none of the encoding dictionaries comprises the specified attribute value; identifying, for each of the identified access keys, the respective data record and all of the attribute values of said respective data record having the each of the identified access keys, wherein if said identified respective data record comprises one or more of the identified attribute values encoded by one or more of the respective encoding dictionaries then the one or more of the encoded attribute values of said respective data record are decoded using one or more of the respective decoding dictionaries; and sending to the database user all identified data records and their at-tribute values. The set of steps comprises the following steps: identifying the encoding dictionary comprising the specified attribute value; identifying the respective identification value of the specified attribute value in the respective coding entry of the identified encoding dictionary; identifying all of the attribute vectors, which attribute values are encoded using the identified encoding dictionary and comprising the identified respective identification value; and identifying all of the access keys of the identified respective identification value in all of the identified contiguous attribute vectors.

In another embodiment, the execution of the processor-executable program code further causes the computing device to execute the following steps in response to receiving by the computing device a request to execute an operation on the column-based database from a database user, wherein the request comprises an instruction to delete in the column-based database all data records comprising an attribute value specified in the request: executing a set of steps if one of the encoding dictionary comprises the specified attribute value; identifying all of the attribute vectors comprising the specified attribute value and all of the access keys of the specified data value in all of the identified attribute vectors comprising the specified attribute value if none of the encoding dictionary comprises the specified attribute value; and assigning a marker, for each of the identified access keys, to the respective data record and to all of the either encoded or not encoded attribute values of said respective data record having the each of the identified access keys, the assignment of the marker to either the data record, or the attribute value, or the identification value being indicative that it is excluded from processing when the requests to execute an operation on the column-based database from database users are executed. The set of steps comprises the following steps: identifying the encoding dictionary comprising the specified attribute value; identifying the respective identification value of the specified attribute value in the respective coding entry of the identified encoding dictionary; identifying all of the attribute vectors, which attribute values are encoded using the identified encoding dictionary and comprising the identified respective identification value; and identifying all of the access keys of the identified respective identification value in all of the respective attribute vectors.

This embodiment describes a logical delete of data records. The information of the deleted data records is physically present in the column-store database, but it is ignored, when the requests to execute an operation on the column-based database from database users are executed

In another embodiment, the execution of the processor-executable program code further causes the computing device to execute the following step after the identifying of the respective identification value of the specified attribute value in the respective coding entry of the identified encoding dictionary deleting the coding entry comprising the specified at-tribute value in the identified encoding dictionary and in the complementary decoding dictionary of the identified encoding dictionary.

This functionality enables optimization of dictionary volume by deleting not used coding entries.

In another embodiment, the execution of the processor-executable program code further causes the computing device to execute a step of purging of the column-store database, when at least one of the following criteria is fulfilled: an amount of the marked attribute values is bigger than a first threshold value, an amount of the marked identification values is bigger than a second threshold value, an amount of the marked data records is bigger than a third threshold value, an amount of requests to execute an operation on the column-based database per time unit is less than a fourth threshold value. The step of the purging of the column-store database comprises the following steps: deleting all of the marked attribute values in the attribute vector comprising the marked attribute value and in its respective contiguous record, wherein after the deleting of all of the marked attribute values contiguousness of the contiguous data record, in which all of the marked attribute values are deleted, is maintained; and deleting all of the marked identification values in the attribute vector comprising the marked identification value and in its respective contiguous record, wherein after the deleting of all of the marked identification values contiguousness of the contiguous data record, in which all of the marked attribute values are deleted, is maintained.

This embodiment enables optimum batch scheduling of physical deleting of attribute values and/or identification values after their logical delete, which is described in one the embodiments above. It is executed, when the load of data base is low and/or a lot of data records and their respective values are marked after logically deleting them in the column-store database. Batch execution of physical deleting enables optimum management of memory at physical level, because a change in a length of one or the contiguous data records requires as usual physical shifts of other contiguous data records in the main memory in order to provide compact allocation of the contiguous data records. The amount of requests to execute an operation on the column-based database per time unit can be measured as a number of requests to execute an operation on the column-based database per second. Another advantage of the dictionary structure described here can be understood in the light of this embodiment. With dependent of type of delete operation (physical or logical) there is no need to sort dictionaries and/or to recode the attribute vectors.

In another embodiment, the appending of the identified identification value to the one of the identified attribute vectors comprises the following steps of: generating an additional contiguous data record being a continuation of the contiguous data record used for storage of the one of the identified attribute vectors if the additional contiguous data record is not yet generated; and appending the one of the identified identification values to the additional contiguous data record. The appending of the one of the attribute values to the one of the identified vectors comprises the following steps of: generating another additional contiguous data record being a continuation of the contiguous data record used for storage of the one of the identified attribute vectors if the additional contiguous data record is not yet generated; and appending the one of the attribute values to the additional contiguous data record. The execution of the processor-executable program code further causes the computing device to execute the following step of: defragmenting the column-based database, wherein the defragmenting of the column-based database if executed, when at least one of the following criteria of the second set is fulfilled: an amount of the attribute values and/or the identification values stored in the additional contiguous data record is bigger than a fifth threshold value, an overall data volume stored in the additional contiguous data records is bigger than a sixth threshold value, an amount of requests to execute an operation on the column-based database per time unit is less than a seventh threshold value. The defragmenting of the column-based database comprises the following step of: appending the additional contiguous data record being the continuation of the respective contiguous data record to said respective contiguous data record.

This embodiment describes memory management at physical level, that is way it is preferred that the appending step is performed multiple times in one batch. Batch execution of physical defragmentation of the column-store database enables optimum management of memory at physical level, because a change in a length of one or the contiguous data records requires as usual physical shifts of other contiguous data records in the main memory in order to provide compact allocation of the contiguous data records. The amount of requests to execute an operation on the column-based database per time unit can be measured as a number of requests to execute an operation on the column-based database per second.

In another embodiment, the defragmenting of the column-based database and the performing of the purging of the column-based database are executed simultaneously, when at least one of the criteria of the first set or the second set is fulfilled, wherein if the step of the appending of the additional contiguous data record and the step of the deleting of all of the marked attribute values or all of the marked identification values are to be executed on the same contiguous data record, when the defragmenting of the column-based database and the purging of the column-based database are simultaneously executed, then one of these steps is executed immediately after another one of these steps.

This way of execution of updates of the column-store database at physical level enables further optimization of update procedure of the column-store database. All different update operations requiring physical reallocation of memory are performed batch wise enabling minimization of physical memory reallocations needed for compact allocation of the contiguous data record in the main memory. Moreover all operations to be performed on the same contiguous data record are grouped, i.e. none of the contiguous data records are updated twice in one batch.

In another embodiment, the identification values are nonnegative integer numbers, wherein the appending to the one of the encoding dictionaries and to the complementary decoding dictionary of the one of the encoding dictionaries the coding entry comprising the identification value of the one of the attribute values and the one of the attribute values comprises the step of: assigning a value to the identification value of the one of the attribute values, wherein the assigned value is the least allowable number. The execution of the processor-executable program code further causes the computing device to execute the following steps after the appending to the one of the encoding dictionaries and to the complementary decoding dictionary of the one of the encoding dictionaries the coding entry comprising the identification value of the one of the attribute values and the one of the attribute values: sorting the coding entries in the one of the encoding dictionaries according to their attribute values; and sorting the coding entries in the complementary decoding dictionary of the one of the encoding dictionaries according to their identification values, if the assigned value is not bigger than any of the identification values in the one of the encoding dictionaries and the complementary decoding dictionary of the one of the encoding dictionaries before the appending to them the coding entry comprising the identification value of the one of the attribute values and the one of the attribute values.

This embodiment enables generation of compact identification values. In order to keep the column-store database as compact as possible, it is necessary to allocate the least number of bits needed of storing the identification values. For instance, one of the decoding dictionaries can comprise the following coding records: "0, John", "2, Mary". The coding value "1" is not used, because a coding record "1, Maxim" was previously deleted. The new coding entry for coding new attribute value Nick can be generated in various ways. For instance, the new coding entry may be formulated as "1, Nick", or "3, Nick". The coding entry "1, Nick" is generated according to this embodiment. This way of selection of the identification values enables to keep them as low as possible, i.e. minimize number of bits used for storing these identification values in the main memory.

In another embodiment, the identification values are nonnegative integer numbers, wherein the appending to the one of the encoding dictionaries and to the complementary decoding dictionary of the one of the encoding dictionaries the coding entry comprising the identification value of the one of the attribute values and the one of the attribute values comprises the following step of: assigning a value to the identification value of the one of the attribute values, wherein the assigned value is bigger than any of the identification values in the one of the encoding dictionaries and the complementary decoding dictionary of the one of the encoding dictionaries before the appending to them the coding entry comprising the identification value of the one of the attribute values and the one of the attribute values. The execution of the processor-executable program code further causes the computing device to execute the following step after the appending to the one of the encoding dictionaries and to the complementary decoding dictionary of the one of the encoding dictionaries the coding entry comprising the identification value of the one of the attribute values and the one of the attribute values: sorting the coding entries in the one of the encoding dictionaries according to their attribute values.

This embodiment enables fast operation of the column-store database. Selection of new identification values as specified in this embodiment requires sorting of only encoding dictionary. This can be illustrated on the following example. One of the decoding dictionaries can comprise the following coding records: "0, John", "2, Mary". The coding value "1" is not used, because a coding record "1, Maxim" was previously deleted. The new coding entry for coding a new attribute value Nick can be selected according to this embodiment as "3, Nick". When this coding entry is appended to the decoding dictionary no sorting is needed, because the identification values are already ordered: "0, John", "2, Mary", "3, Nick", i.e. "0", "2", "3".

### Figures

FIG. 1 is a block diagram of an architecture of a system.
FIG. 2A shows an architecture of a data structure.
FIG. 2B shows another architecture of a data structure.
FIG. 2C shows another architecture of a data structure.
FIG. 3A shows an architecture of a data structure.
FIG. 3B shows another architecture of a data structure.
FIG. 3C shows another architecture of a data structure.
FIG. 4A shows an architecture of a data structure.
FIG. 4B shows another architecture of a data structure.
FIG. 4C shows another architecture of a data structure.
FIG. 5 is a flowchart illustrating a method of retrieving data from a data store.
FIG. 6 is a flowchart illustrating a method of adding data to a data store.
FIG. 7A shows an architecture of a data structure.
FIG. 7B shows another architecture of a data structure.
FIG. 7C shows another architecture of a data structure.
FIG. 7D shows another architecture of a data structure.
FIG. 7E shows another architecture of a data structure.
FIG. 7F shows another architecture of a data structure.
FIG. 7G shows another architecture of a data structure.
FIG. 7H shows another architecture of a data structure.
FIG. 8 is a block diagram of a system implementing the methods and systems described herein.
FIG. 9 is a flowchart illustrating a method.
FIG. 10 is a flowchart illustrating a method.
FIG. 11 is a flowchart illustrating a method.
FIG. 12 is a flowchart illustrating a method.
FIG. 13 is a flowchart illustrating a method.
FIG. 14 is a flowchart illustrating a method.
FIG. 15 is a flowchart illustrating a method.

### Detailed description

Example embodiments of the present invention provide for a data structure and method of manipulating data in a database (also referred to as "a data store") that reduces the complexity and enhances the performance of data storage, including in-memory databases such as SAP HANA®. The complexity is reduced and the access speed is enhanced by removing the need for a differential buffer, rebuilding of attribute vectors, and performance of merge operations between a main store and the differential buffer. For example, when data is added to a database, instead of rebuilding an attribute vector, the data can be simply added as a new entry in the attribute vector. By reducing the number of operations that are performed on attribute vectors, computational power and time is saved, particularly for cases in which the size of the attribute vectors is or becomes large.

Example embodiments of the present invention provide for a data structure and method of accessing, modifying, and adding data in the data structure. The data structure can include an encoding dictionary, a decoding dictionary, and an attribute vector. The attribute vector can include information for cross-referencing characteristics associated with the same entry. Example embodiments of the method can add data to the encoding and decoding dictionaries as one or more entries and assign a value identifier ("valueID") for the added entries. The method can add the valueID to attribute vector(s) associated with the dictionaries. The method can search for the value in an encoding dictionary, determine a valueID corresponding to the data based on a match in the encoding dictionary, use the attribute vector to find all relevant data across all dictionaries and attribute vectors, assemble the retrieved information in a tuple, and output at least a portion of the data associated with the value.

The data structures and methods described herein can be practiced in combination with other data structures and methods. For example, a processor can determine that it is optimal for a period of time to operate a database according to the data structures and methods described herein, and that at other times and/or situations (e.g., data mining, static operations) can use other techniques for constructing, accessing, and manipulating data structures.

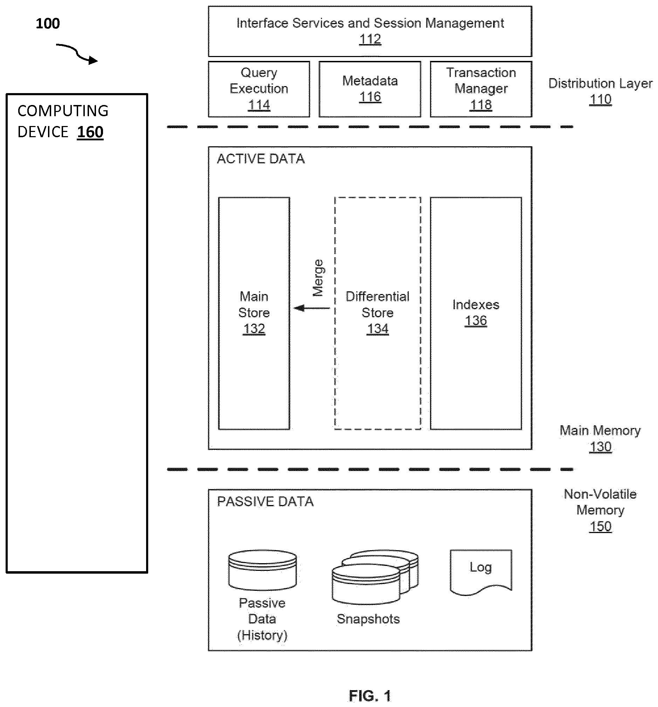

FIG. 1 is a block diagram of a system 100 such as SAP HANA® according to an example embodiment. The system 100 can include a distribution layer 110, main memory 130, and non-volatile memory 150 (including, but not limited to ROM, flash, magnetic storage, and optical discs), and a computing device 160 controlling operation of the aforementioned units. The computing device can comprise one or more computer micro-processors or a processor cluster. One of the digital storage media of the non-volatile memory 150 can store processor executable instructions (code), which execution causes the computer unit to perform the various methods on the system 100 described herein and to provide functionalities of the system 100 described herein as well. The code can be partially or completely uploaded in the main memory in order to speed up the performance of the column-store database. The distribution layer 110 can interface with a user and can include components that enable retrieval and manipulation of data. These components can include an interface services and sessions management module 112, a query execution module 114, a metadata module 116, and a transaction manager module 118. The interface services and session management module 112 can interface with a user, for example, providing a graphical user interface to solicit and provide data to the user. The interface services and session management module 112 can also establish and manage sessions for data manipulation, for example between sockets via a transport protocol. The query execution module 114 can receive a query with or without the aid of the interface services and session management module 112. For example, the interface services and session management module 112 can receive a query from a user and pass the query to the query execution module 114. In an alternative example, the query execution module 114 can directly extract a query from a user. The query execution module 114 can further process the query, for example parsing the query to then perform the functions of the query on the active data. The metadata module 116 can receive metadata associated with a query and/or a session, and like the query execution module 114, can do so with or without the aid of the interface services and session management module 112. In an embodiment, the metadata can be the basis for determining what data structures and/or methods or used in a particular session or for processing a particular query. The transaction manager 118 can manage one or more transaction within a session, and also like the query execution module 114, can do so with or without the aid of the interface services and session management module 112.

The main memory 130 can include active data, which active data can be more readily accessed and manipulated, compared with passive data. Non-volatile memory 150 can include passive data, which can be data that the user does not immediately need. Data can be transferred between main memory 130 and non-volatile memory 150.

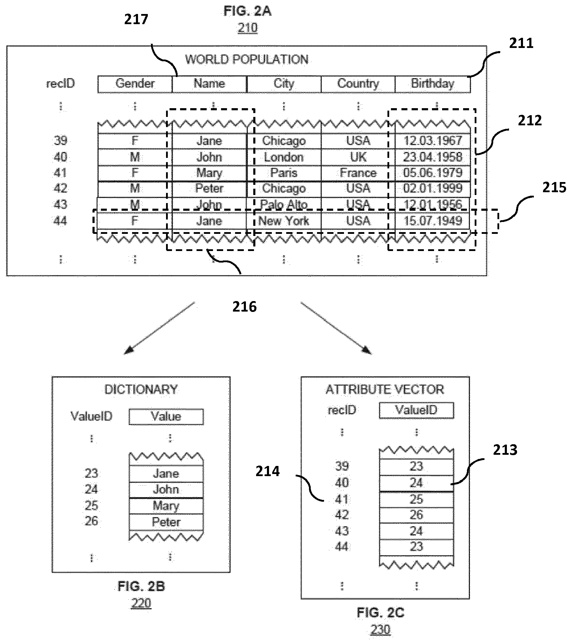

The active data in main memory 130 can include a main store 132, a differential store 134 (also referred to as a "differential buffer"), and indexes 136. Data can be stored in the main store 132 and differential store 134 in tabular form and, more specifically, in the form of dictionaries, which are described further herein, e.g., with respect to FIG. 2B. Data can be stored in the main store 132 in a form of a column-based database, while updates for the column-store database can be stored in the differential store 134. The index 136 can store various indexes facilitating access to data in the main store and the differential store. The data of the column-store database is stored in a form of attribute vectors 230, 360, 460, 720,which are also described further herein, e.g., with respect to FIGs. 2C, 3C, 4C, and 7B. The attribute vector is a contiguous logical structure. The attribute vector can be completely physically stored in the main store as a contiguous data record if no updates a made on the attribute vector. When updates are made on the attribute vector (one or more new elements are added to the attribute vector), and no defragmentation of the column-store database is made yet, then the attribute vector is physically stored in the contiguous data record in the main store and in its one or more new elements are physically stored in the an additional contiguous data record in the differential store.

The differential store 134 can improve performance speeds by temporarily storing data. Thus, the differential store removes the need to reallocate memory for the contiguous data records in the main store 132 after each insertion and deletion performed on the attribute vector. Instead, the differential store can be periodically merged with the main store 132, which reduces the frequency of performing processor-intensive functions. The provision of the differential store 134 reduces the expense of adding and deleting data from the main store 132.

FIGs. 2A to 2C show example architectures of data structures 210, 220, and 230, which can be implemented in SAP HANA®. These data structures can be stored in the main store 132 of a system 100. Data structures 210, 220, and 230 are shown as populated with example values. For example, data regarding various individuals in the world can be conceptualized as a single table 210 having columns for various characteristics (e.g., gender, name, city, country, and birthday, as shown) of the individual. The recID column can be implicit, tracking the number of records in the table. Each row in table 210 can represent an individual or in the other words a data record in the column-store database. For example, Jane, who is a female living in Chicago, USA and born on March 12, 1967 can be stored in row 39 of the world population table. Additional columns for other characteristics are also possible.

The description of the table 210 can be reformulated using terms of art used here. The column-store database stores data records. For instance, these can be data rows 215 in the table 210. The data records comprise attribute values 212 of attributes 211. For instance the data record 215 comprises attribute values "F", "Jane", "New York", "USA", and "15.07.1949" being respective attribute values of attributes 211 "Gender", "Name", "City", "Country", and "Birthday". The attribute values 212 of the attribute

Space can be saved by storing portions of the world population data separately, for example, as a dictionary 220 and an attribute vector 230. Each column of the table can be stored as a dictionary and an attribute vector. In this case each of the columns of the table 210 is stored as a separate attribute vector storing attribute values of the respective attribute. Position of attribute value in the attribute vector is an indicative of its access key. The column-database is structured in a way that attribute values have the same access keys for each of the data records. Thus in order to specify attribute values of the data record, it is necessary specify the attributes, which attribute values are comprised in the respective attribute vectors and in the data record, and access key being the same for all of the respective attribute vectors for accessing attribute values of the data record in the respective attribute vectors. In this case the attributes act as unique identifications for their respective attribute vectors in the column-store database. Alternatively or in addition it is possible specify attribute vectors instead of attributes. In this case each of the attribute vectors needs to have a respective unique identification in the column-store database. For instance, in order to specify the record 215 marked as "recID 44 in the table 210, it is necessary to specify a list of attributes "Gender", "Name", "City", "Country", and "Birthday" and/or a list of unique identifications of the attribute vectors of the attributes "Gender", "Name", "City", "Country", and "Birthday". This list of attributes enables to identify the attribute vectors of these attributes, unless the unique identifications of the attribute vectors are specified directly. When the attribute vectors comprising attribute values of the data record are identified, then it is possible to retrieve the attribute values of the data record by using the same access key specified for the data record for retrieving the respective attribute value in each of the identified record.

Storing of attribute values in attribute vectors facilitates effective utilization of dictionaries for encoding of attribute values in order to reduce the data volume of contiguous data records wherein the attribute vectors are stored. Encoding of a particular attribute vector can be decided by analyzing a datatype of attribute values stored in in the particular attribute vector. For instance, in the world population example, the data can be captured by dictionaries for each of: gender, name, location, and birthday, along with corresponding attribute vectors for each dictionary (e.g., gender attribute vector, name attribute vector, location attribute vector, birthday attribute vector, etc.). For example, a name dictionary 230 can include names as its values 213 (e.g., "Jane," "John," etc.), while a gender dictionary can include genders as its values (e.g., "female" or "male"). In these cases utilization of dictionaries is justified. Because substituting the letters "F" and "M" of the gender column with one bit being equal to 0 or 1 depending on the gender is justified. On contrary, utilization of a dictionary for an attribute vector "age" (not depicted on Fig. 2A) comprising ages of persons listed in the table 210 most likely will not result in reduction in main memory used for storage of the contiguous data record wherein the age values are stored. Indeed the age values are small integer numbers, continuously populating entire interval of possible age values. As a result there of the values of age will have almost no difference in comparison with values of the dictionary used for their encoding in the main memory. Each dictionary can also have a corresponding attribute vector. For example, a name dictionary has a name attribute vector, and a gender dictionary has a gender attribute vector. Some of the dictionaries can be used for encoding more than one corresponding attribute vectors. It is justified, when two different attribute vectors, e.g. "name" and "second name" store attribute values having the same datatype. In this case one dictionary can be used for both of the attribute vectors, because they store similar attribute values. For instance when the table 210 stores full names, then the name of a famous writer "Erich Maria Remark" is stored in the separate columns, the first name "Erich" is stored in the column having attribute "first name", the second name "Maria" is stored in the column having attribute "second name", and the family name "Remark" is stored in the column "family name". Since the attribute values in the attribute vectors "first name" and "second name" belong to the same datatype have most likely will have similar spectrum of attribute values during utilization of the column-store database it makes sense to encode both of these attribute vectors using the same dictionary.

In another example, the "Name" column in world population table 210 can be split into (or the data can captured in) name dictionary 220 and name attribute vector 230. Each dictionary and attribute vector can include an implicit identification value (valueID) associated with each attribute value. The valueID is the position of the value in the dictionary. In this case the valueIDs are stored in the main memory instead of attribute values (names).

The dictionary 220 can store all distinct attribute values of table 210. In the example illustrated in Fig. 2B, dictionary 220 can store all distinct attribute values of the "Name" column from table 210. As shown, although "Jane" and "John" each appears more than once, they are each stored as a single entry in dictionary 220. The dictionary 220 can include a column for the value. For the case of Fig. 2B, the value is the name. For example, the value "Jane" has a position "23" therefor the valueID in the Name attribute vector for "Jane" will be "23".

The attribute vector 230 can include implicit recIDs (access keys) associated with dictionary valueIDs for all entries in the dictionary 220. More specifically, the attribute vector can include a recID column to store a position associated with a valueID. The recID column can be implicit and can correspond to the recID of global table 210, i.e. identify the corresponding data record in the global table. For example, the valueID 23 corresponds to recID 39. The recID can be used as an additional identifier, for example as a cross-reference between attribute vectors. That is, in some instances, each of the recIDs can be used to look up other values associated with a particular position, for example in other attribute vectors, as further described herein. This structure of dictionary is very compact, because in a most simple case it contains only one column of attribute values, wherein a position of the attribute value in the single column of the dictionary can be indicative if its identification value used for its encoding in the respective attribute vector (Fig. 2B and Fig. 2C). The attribute values in the single column of the dictionary 220 have to be sorted in order to speed up a search for the identification value corresponding to the particular attribute value. When no sorting is made, the dictionary has to be looked through from the beginning in order to find the needed identification value. Although this structure of dictionary is simple and compact is has a disadvantage. When a new data record is added to the table 210 and this record comprises a new name, which is not yet in the dictionary, it has to be added to the dictionary and afterwards it has to be sorted once again. As a result thereof the attribute values get different identification values and the corresponding attribute vector 230 has to be encoded again.

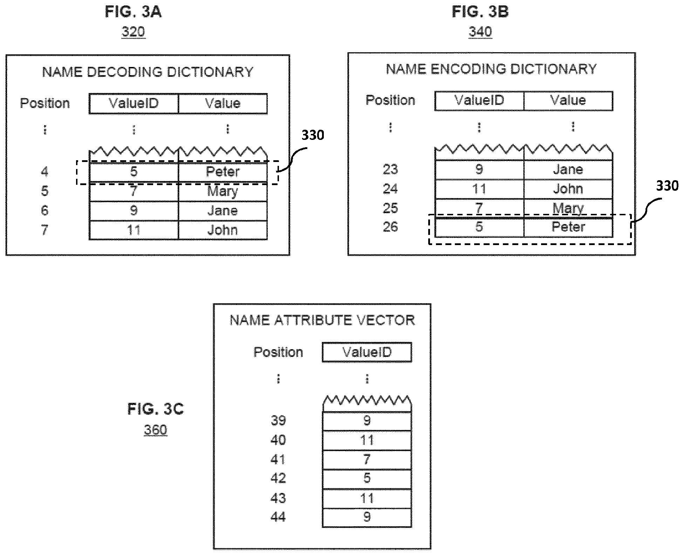

FIGs. 3A to 3C show alternative architectures of dictionaries 320 and 340 and the corresponding attribute vector 360, wherein the encoding dictionary 340 is used for encoding of the attribute values in the attribute vector 360 and the decoding dictionary 320 is used for decoding of the attribute values in the attribute vector 360Decoding dictionary 320 can be similar to encoding dictionary 340, each having the same coding entries comprising pairs of identification values and attribute values. One way the decoding dictionary can differ from the encoding dictionary is the order of the coding entries, based on the position. For example, the decoding dictionary 320 can be ordered according to identification values (valueId) (numerically in the example shown), and the encoding dictionary 340 can be ordered according to attribute values (value) (alphabetically in the example shown). Organizing the dictionaries in the manner described can enable quick searching by valueID in the decoding dictionary and by value in the encoding dictionary. One effect of providing separate encoding and decoding dictionaries is that one of the dictionaries, e.g., the decoding dictionary, need not be sorted since the valueID will increment with every new entry, when one or more new coding entries are added to the encoding dictionary and its complementary decoding dictionary. The encoding and decoding dictionaries can be stored in the main memory.

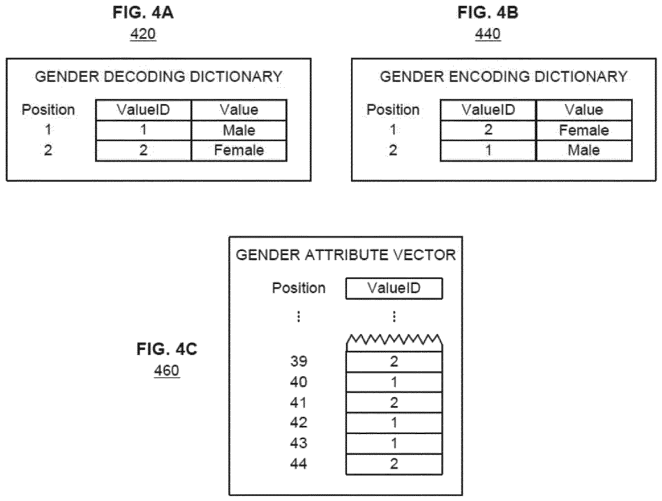

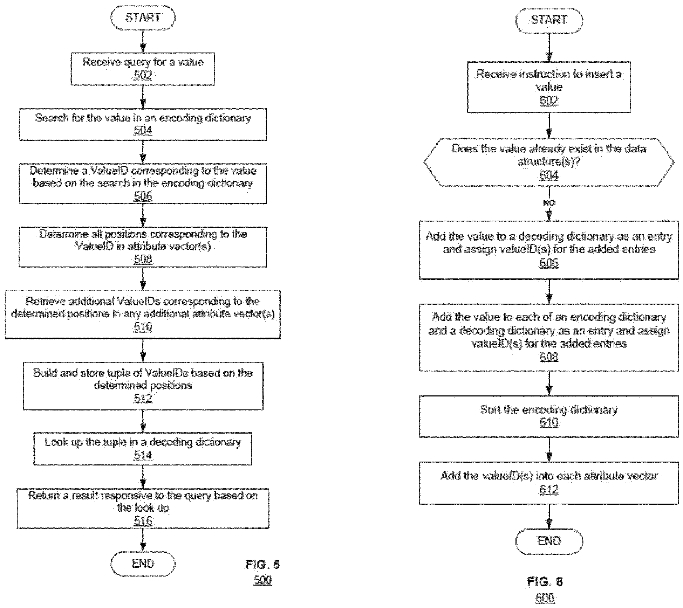

FIG. 5 is a flowchart illustrating a method 500 of retrieving data from a data store according to an example embodiment. In a first step 502, the method 500 receives a query to search for a value (where the value may or may not be stored in the data store). For example, the query can be a SELECT command (e.g., "SELECT * FROM tb where Name=Mary"), with an object of returning all data associated with the name "Mary" from a table tb. Additional parsing of the query can also be performed. In step 504, the method 500 searches for the value in the Name dictionary, for example an encoding dictionary 340 as described herein. In the example provided, the search value is "Mary." If the value is not found in the data store, the method 500 can end. If the value is found, the method 500 can proceed to step 506, in which the method 500 determines a ValueID corresponding to the search value in the encoding dictionary. The determination can be based on a lookup of the ValueID associated with the search value. For example, the ValueID is "7," for "Mary," in encoding dictionary 340. Based on the ValueID, the method 500 can determine all positions corresponding to the ValueID in step 508. For example, the determination can be based on a lookup in the attribute vector 360 that reveals that "Mary," whose ValueID is "7," corresponds to position "41" in name attribute vector 360. More than one position can correspond to the valueID. For example, positions 39 and 44 both correspond to value ID "9," indicating that, in the snapshot, there are two individuals both with the same name, "Jane." In step 510, the method 500 retrieves all valueIDs corresponding to the position determined in step 508. This is illustrated with the aid of FIGs. 4A to 4C. FIGs. 4A to 4C show architectures of data structures 420, 440, and 460 according to example embodiments. Gender decoding dictionary 420, gender encoding dictionary 440, and gender attribute vector 460 have the same features and functions as the name decoding and encoding dictionaries and attribute vectors shown in FIGs. 3A to 3C, unless otherwise described herein.

To retrieve additional valueIDs corresponding to position "41," the method 500 can access each of the other attribute vectors. For the gender attribute vector 460, the valueID "2" can be retrieved based on the position "41". Thus, pointers to all information pertaining to search value "Mary" can be gathered. In step 512, the method 500 builds and stores a variable including all of the valueIDs corresponding to the determined positions. In an embodiment, the valueIDs are built and stored in a tuple. For the example provided, the tuple can be ["7," "2"], because the name attribute vector 360 indicates that position "41" corresponds to valueID "7," and gender attribute vector 460 indicates that position "41" corresponds to valueID "2".

In step 514, method 500 proceeds to look up the tuple in one or more dictionaries such as the name decoding dictionary 320 and the gender decoding dictionary 420. The name decoding dictionary 320 reveals that the first valueID "7" in the tuple corresponds to "Mary." The gender decoding dictionary 420 reveals that the second valueID "2" in the tuple corresponds to "female." Additional dictionaries including additional information are possible. Thus, the information associated with Mary, for example, as shown in the world population table 210 can be assembled. The result of the lookup performed in step 514 can be returned in step 516. For example, the result can indicate that Mary is a female living in Paris, France, born on June 5th, 1979.

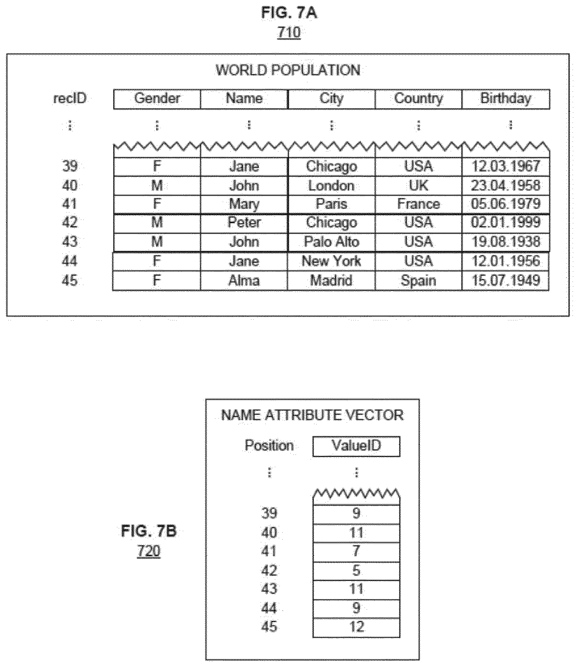

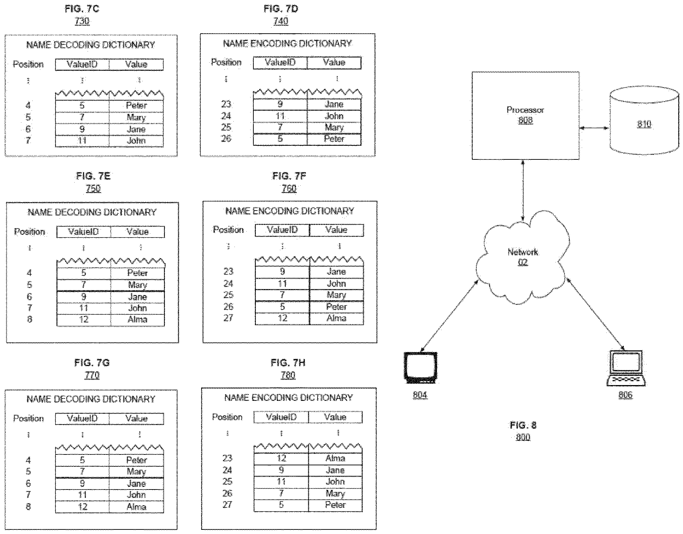

FIG. 6 is a flowchart illustrating a method 600 of adding data to a data store according to an example embodiment. The method 600 is explained with the aid of FIGs. 7A to 7H, which show architectures of data structures 710 to 780 according to example embodiments. World population table 710 shows a state of a global table after adding an entry for "Alma." Name dictionaries 730, 740 show an example state of the dictionaries before adding "Alma". Name dictionaries 750, 760 show an example state of the dictionaries after adding "Alma" (e.g., steps 604 and 606), but before any sorting is performed (e.g., step 608). Name dictionaries 770, 780 show an example state of the dictionaries after sorting (e.g., step 606). Attribute vector 720 shows a state of the attribute vector after adding "Alma" (compared with attribute vector 360, which shows a state of the attribute vector before adding "Alma.")

In a first step 602, the method 600 receives an instruction to insert data, for example a value. The instruction to insert the data can be an INSERT command (e.g., "INSERT INTO tb Name=Alma"), with an object of inserting a new entry, "Alma" into table tb. Although the example provided inserts a name into the table, the instruction can include one or commands to insert additional data (e.g., gender, city, etc.) into the table, which can be carried out according to essentially the same steps. The instruction can be provided as a single command or as multiple commands, which can be provided in series. The value to be inserted can also be parsed from the instruction(s). In step 604, the method 600 can determine whether the value is already in the table. For example, the method 600 can perform a lookup in an encoding dictionary data structure to determine whether there is a match to the value. If the value exists, then the method 600 can determine whether entries corresponding to the value already exist in the attribute vectors. If the value exists in the encoding dictionary, but not the attribute vector, then an entry can be added in the attribute vector. Otherwise, if the value does not exist in either the encoding dictionary or the attribute vector, the method proceeds to step 606. In step 606, the value can be added to a decoding dictionary. The value can be added in a new row in the dictionary, along with a corresponding valueID. The valueID can be selected according to an internal counter, e.g., the value can be assigned as a sequential number. In an embodiment, each unique value corresponds to a unique valueID. For example, in a decoding dictionary 750, "Alma" can be added as a new entry with implicit position "8," and assigned valueID "12," because Alma does not yet exist in the dictionary. ValueID is "12," because it is the next unique number. After adding the value to a decoding dictionary, the method 600 can proceed to step 608 to add the value to an encoding dictionary. The value can be added in a new row in the dictionary, along with a corresponding valueID. The valueID in the encoding dictionary is the one assigned when the value is added to a corresponding decoding dictionary. In an embodiment, each unique value corresponds to a unique valueID. For example, in a encoding dictionary 760, "Alma" can be added as a new entry with implicit position "27," and assigned valueID "12," which value ID was determined when "Alma" was added to the decoding dictionary 760.

After adding the values to the dictionaries, the method 600 can proceed to step 610 to sort (e.g., re-sort) the encoding dictionary. For example, the encoding dictionary 780 shows an example state of the dictionary after it has been sorted such that the values are alphabetized, i.e., Alma, Jane, John, Mary, and Peter. After sorting, Alma can have implicit index 23, Jane can have implicit index 24, etc., because Alma is alphabetically before Jane. In an embodiment, the decoding dictionary 770 is not sorted, because values are already sorted by ValueID by virtue of the selection and assignment of the ValueID such that they are sequential, e.g., ascending (or descending) in order. In step 612, the method 600 adds to each attribute vector the valueID assigned to the newly-added value. For example, valueID "12" assigned to "Alma" is added in attribute vector 720. The method 600 also assigns a position to the ValueID, which position can be the same across different attribute vectors to identify a particular entry. For example, the position of a row in world population table 210 can be the same as the position of a corresponding column value in the attribute vectors. By adding a value ID which is not an index or position to the Dictionary, and a reference to it from the attribute vector, it is not necessary anymore to rebuild the attribute vector the drawback is the need to have two dictionaries to maintain the speed of lookups. As the current model, attribute vectors still reference by position to the rows in the world population table, so that position "x" in the world population table is represented with position "x" of every attribute vector.

FIG. 8 shows an example system 800 that includes a processor 808 in communication with a computer-readable medium 810. The computer readable medium 810 can be a database internal to the processor 808, external to the processor 808, external server, or external storage means. The computer-readable medium 810 can include instructions executable by the processor 808, such that, when the processor 808 executes various portions of the instructions, the instructions cause the processor 808 to perform the various methods described herein. The example system further includes terminals 804 and 806. For example, one terminal 804 can be used by a front-end user to interact with system 800, and the other terminal 806 can be used by a back-end user to interact with the system 800. The processor 808 and clients 804 and 806 can be in communication via network 802, which can be the Internet. Each of the clients 804 and 606 can access the processor 808 and any applications stored thereon via the network 802.

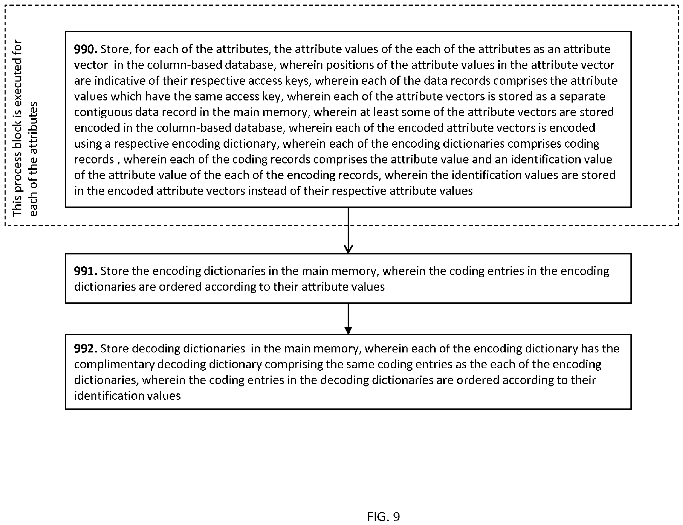

Fig. 9 illustrates a process of building of a column-store database and dictionaries in the main memory.

The process block 990 the data records comprising attribute values of attributes are stored in the main memory. The following is procedure executed for each of the attributes: storing all attribute values of the attribute as an attribute vector, wherein positions of the attributes in the attribute vector are indicative of their access keys, wherein the attribute vector is stored as a separate contiguous data record in the main memory, wherein when the attribute vector is to be stored encoded in the attribute vector, then an encoding dictionary for all of the attribute values is generated and all attribute values are stored encoded in the attribute vector using the encoding dictionary. The encoding dictionary comprises coding records. The each of the coding records comprises the attribute value of the each of the coding records and an identification value of the attribute value of the each of the coding records and an identification value, wherein when the attribute vector is encoded, then the identification values of the attribute values specified in the respective coding records are stored in the attribute vector instead of their respective attribute values. The coding entries in the encoding dictionary are ordered according to their attribute values. In addition the following procedure may further comprise generating of the complementary decoding dictionary comprising the same coding entries the encoding dictionary, wherein the coding entries in the decoding dictionary are ordered according to their identification vales. Alternatively the decoding dictionary can be generated after all attribute vectors are stored in the main memory.

The procedures mentioned above can be executed in parallel, sequentially, or in a way being a combination of the latter two ways of execution.

In the process block 991 the encoding dictionaries are stored in the main memory.

In the process block 992 the decoding dictionaries are stored in the main memory. The process blocks 991 and 992 can be executed in any sequence or simultaneously. Execution of any of them can be started even during execution of the process block 990, i.e. the decoding or encoding dictionary can be stored in the main memory after it is generated.

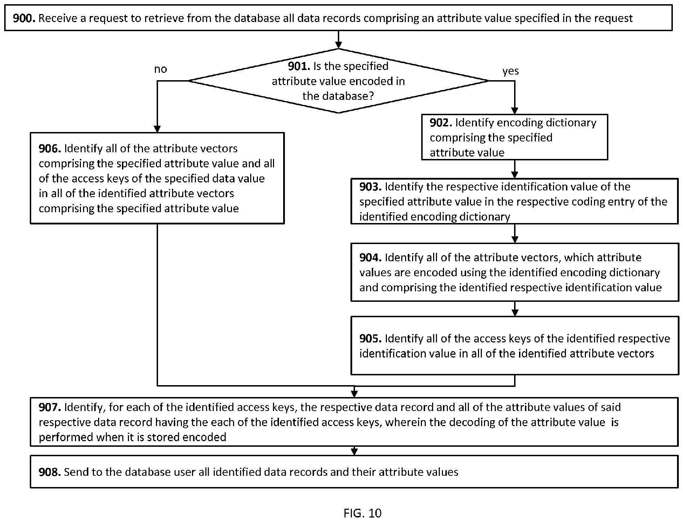

Fig. 10 illustrates a flow diagram of a method for processing a request of a data base user to perform an operation on the column-store database received by the computing device, wherein the request comprises an instruction to retrieve all data records comprising a specified attribute

In a process block 900 the aforementioned request is received. Afterwards a datatype of the specified attribute value is identified, if not specified in the instruction. Since in many cases the number of various datatypes used in database is less than the number of the attribute vectors and not all attribute vectors are encoded, the most effective way to perform a search in the column-store database for the data records comprising the specified attribute value is to check first whether for the specified attribute value has the datatype, which attribute values are encoded in the column-store database. This can be done by searching the datatype of the specified attribute value in a list of datatypes which attribute values are encoded in the database. This list can be short and can be created upfront and updated on a regular basis. If in a decision process block 901 as a result of the aforementioned procedure it is determined that the specified attribute value is stored in the database in an encoded form, then a process block 902 is executed otherwise a process block 906 is executed.

In the process block 902 the encoding dictionary used for encoding of the specified attribute value is identified. This can be done by checking assignments between different datatypes and their respective encoding dictionaries.

A process block 903 is executed after the process block 902. In the process block 903 the respective identification value of the specified attribute value is identified in the encoding dictionary identified in the process block 902. This can be done by querying the encoding dictionary.

A process block 904 is executed after the process block 903. In the process block 904 all attribute vectors encoded using the identified encoding dictionary are identified, wherein the identified attribute vectors comprise the identification value of the specified attribute value. This can be done by querying each the attribute vectors encoded the identified encoding dictionary by the identification value.

A process block 905 is executed after the process block 904. In the process block 905 all access keys of the identified identification value of the specified attribute values are identified in all of the identification vectors identified in the process block 905.

In the process block 906 the attribute vectors storing the attribute values of the same datatype as the specified attribute value are identified, afterwards these attribute vectors are queried by the specified attribute value in order to identify all access keys of the specified attribute value in all of the attribute vectors comprising the specified attribute values.

Depending on selection of the next following process block in the decision process block 901 a process block 907 is executed either after the process block 905 or after the process block 906. In the process block the database is queried by all access keys identified in either the process block 906 or the process block 905. This query delivers all data records comprising encoded or not encoded attribute values having any of the identified access keys. If at least some of the retrieved attribute values are encoded, then each of some of the retrieved attribute values is decoded using respective decoding dictionary. As a result of execution of the process block 907, all data records and their attribute values in the decoded form are retrieved from the database.

A process block 908 is executed after the process block 907. In the process block 908 all of the retrieved data records are sent to the user.

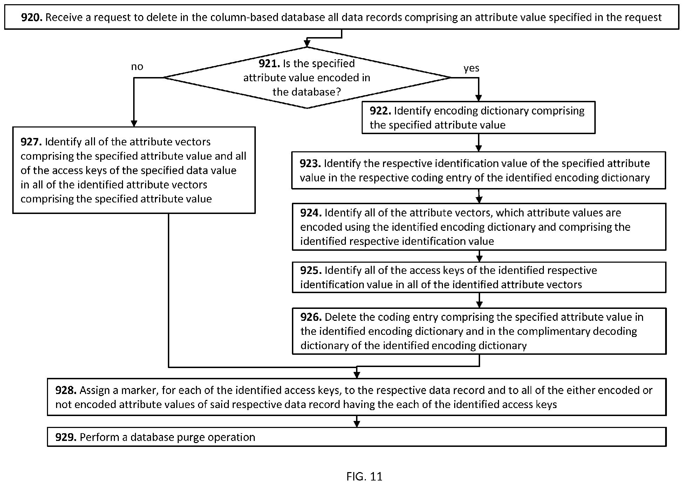

Fig. 11 illustrates a flow diagram of a method for processing a request of a data base user to perform an operation on the column-store database received by the computing device, wherein the request comprises an instruction to delete all data records comprising a specified attribute.

In a process block 920 the aforementioned request is received. Afterwards a datatype of the specified attribute value is identified, if not specified in the instruction. Further execution of the process block 920 is the same as execution of the process block 901.

The results delivered by the execution of the process block 921 enable to determine in a next following decision process block 921 whether the specified attribute value is encoded in the database. If the specified attribute value is encoded then the decision process block causes execution of a process block 922, otherwise it causes execution of the process block 927.

The process block 927 is executed in the same way and delivers the same results as the previously described process block 906.

A sequence of process blocks 922-925 is executed in the same way and delivers the same results as the previously described sequence of the process blocks 902-905.

An optional process block 926 is executed after the process block 926. In this process block the coding entry comprising the specified attribute value is deleted in the identified encoding dictionary and in its complementary encoding dictionary.

If the process block caused execution of the process block 922 the process block 928 is executed ether after the optional process block 926, if it is executed, or after the process block 925, if said optional process block is not executed. If the process block caused execution of the process block 927, then the process block 928 is executed after the process block 927.

In the process block 928 the following is performed for each of the identified access keys: perform a query by the identified key in order identify the data record comprising at least one either encoded or not encoded attribute value having the identified access key, assign a marker the identified data record and all of its either encoded or not encoded attribute values. The assignment of the marker to either the data record, or the attribute value, or the identification value is indicative that it is excluded from processing when the requests to execute an operation on the column-based database from database users are executed. In the other words, the assignment of the maker means a logical delete in the database.

An optional process block 929 is performed after the process block 928. In this process block a database purge operation is executed. In this operation a physical delete of the previously marked data records and all of its either encoded or not encoded attribute values is performed. Since this operation is related to physical reallocation of memory it has to be executed when big volume of marked data is to be purged and/or when the database is not heavily loaded by requests of users. This operation can be executed when at least one of the following criteria of a first set is fulfilled: an amount of the marked attribute values is bigger than a first threshold value, an amount of the marked identification values is bigger than a second threshold value, an amount of the marked data records is bigger than a third threshold value, an amount of requests to execute an operation on the column-based database per time unit (e.g. second) is less than a fourth threshold value. The purging of the database comprises the following steps: deleting all of the marked attribute values in the attribute vector comprising the marked attribute value and in its respective contiguous record, wherein after the deleting of all of the marked attribute values contiguousness of the respective contiguous data record, in which all of the marked attribute values are deleted, is maintained; and deleting all of the marked identification values in the attribute vector comprising the marked identification value and in its respective contiguous record, wherein after the deleting of all of the marked identification values contiguousness of the respective contiguous data record, in which all of the marked attribute values are deleted, is maintained.

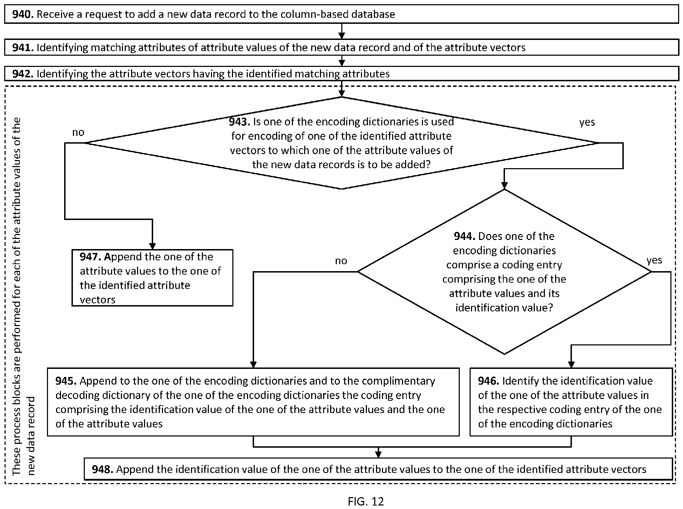

Fig. 12 illustrates a flow diagram of a method for processing a request of a data base user to perform an operation on the column-store database received by the computing device, wherein the request comprises an instruction to add a new data record to the database delete all data records comprising a specified attribute.

In a process block 940 the aforementioned request is received. Afterwards attributes of all of the attribute values of the new data record are identified, unless they are specified in the instruction.

A process block 941 is executed after the process block 940. In this process block all matching attributes of the attribute vectors which match the attributes of the attribute values of the new data stored are identified. This identification is performed, because attribute of each of the attribute values of the new data record has to be the same as the attribute of the attribute vector to which the each of the attribute values of the new data record has to be appended.

A process block 942 is executed after the process block 941. In this process block all attribute vectors having the identified matching attributes are identified, wherein each of the attribute values of the new data record is to be appended to the respective identified attribute vector.

The following set of process blocks is performed for each of the attribute values of the new data record. These sets of process blocks can be executed simultaneously, sequentially, or in a process sequence being a combination of the latter two options.

A decision process block 943 is executed after the process block 942. In this process block one of the attribute vectors to which the respective attribute value of the new data record is to be appended is selected. If the one of the attribute vectors is encoded then the decision process block 943 causes execution of another decision process block 944, otherwise the decision process block 943 causes execution of a process block 947.

In the process block 947 the respective attribute value is appended to the one of the attribute values.

The decision process block 944 causes execution of a process block 946 if the encoding dictionary used for encoding of the one of the attribute vectors comprises the coding record comprising the respective attribute value and its identification value, otherwise it causes execution of a process block 945.

In the process block 946 the identification value of the one of the attribute values is identified in the respective coding entry.

In the process block 945 a new coding record comprising the respective attribute value and its identification value is appended to the encoding dictionary used for encoding of the one of the attribute vectors and to its complementary decoding dictionary, wherein the identification value of the respective attribute value is unique for the entire encoding dictionary to which it is added.

Depending on the selection of the next following process block in the decision process block 944, a process block 948 is executed either after the process block 945 or after the process block 946.

In the process block 948 the identification value of the respective attribute value is appended to the one of the attribute vectors.

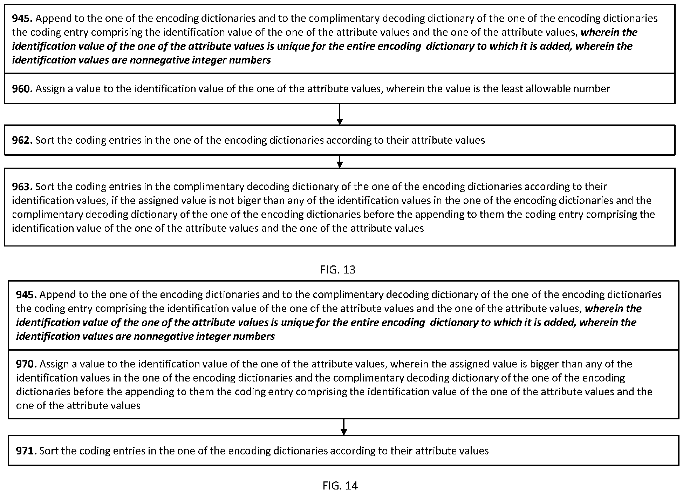

Fig. 13 illustrates optional extension of the process block 945, wherein the attribute values are nonnegative integer values. This choice is motivated by selecting data values which storage demands the least possible number of bits.

In a process block 960 being a part of the process block 945 a value is assigned to the identification value of the respective attribute value, wherein the assigned value is the least allowable number.

Process blocks 962 and 963 are executed after the process block 945 comprising the process block 960. The process blocks 962 and 963 can be executed in any sequence with respect to each other or simultaneously.

In the process block 962 the coding entries in the encoding dictionary to which the new coding record is appended are sorted according their attribute values.

In the process block 963 the coding entries in the decoding dictionary to which the new coding record is appended are sorted according their identification values, if the assigned value is not bigger than any one of the identification values in the encoding dictionary and the complementary decoding dictionary before the appending to them the new coding record.

'The benefits of this way of adding new coding records to the dictionaries can be illustrated on the following example. Suppose, the encoding and decoding dictionary comprise two coding records: "0, John"; "2, Mary", each. The new coding record is "1, Nick". The new identification value "1" is selected because it is the least allowable number. This way of selecting indemnification values allows to keep them as low as possible and as a result thereof minimize the number of bits used for their storage. This approach my spare big volumes of memory. On the other hand, both of dictionaries have to be sorted after appending of the new coding record in this example.

However the need to sort both of the dictionaries occurs not in every case. Suppose, the encoding and decoding dictionary comprise two coding records: "0, John"; "1, Mary", each. The new coding record is "2, Nick". The new identification value "2" is selected because it is the least allowable number. In this example only the encoding dictionary is to be sorted after appending the new coding record.

Fig. 14 illustrates another optional extension of the process block 945, wherein the attribute values are nonnegative integer values..

In a process block 970 being a part of the process block 945 a value is assigned to the identification value of the respective attribute value, wherein the assigned value is bigger than any one of the identification values in the encoding dictionary and the complementary decoding dictionary before the appending to them the new coding record. As usual the value is selected as the next following number in a sequence of ordered identification values in the decoding dictionary to which the new coding record is to be added.

A process block 971 is executed after the process block 945 comprising the process block 970.

In the process block 962 the coding entries in the encoding dictionary to which the new coding record is appended are sorted according their attribute values.

This way of selecting of a new identification value guarantees that in contrast to the method described above only one of the dictionaries has to be sorted in any circumstances.

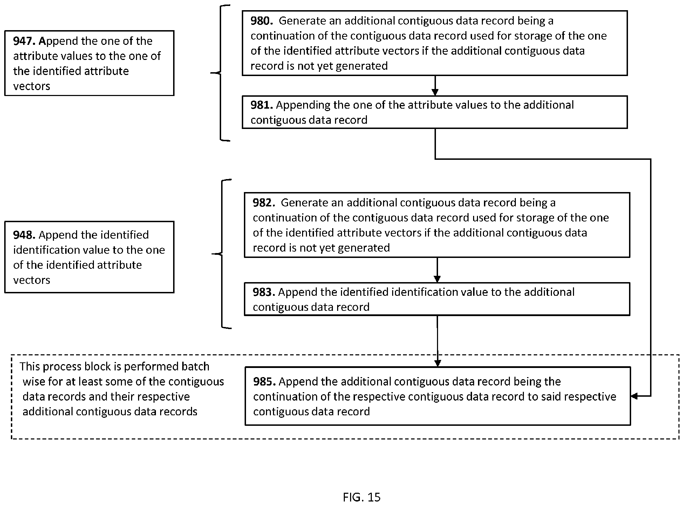

Fig. 15 illustrates execution of the process blocks 947 and 948 in greater detail in relation to memory allocation management at physical level.

The process block 947 can comprise process blocks 980 and 981.

In the process block 980 an additional contiguous data record being a continuation of the contiguous data record used for storage of the attribute vector to which the attribute value is to be appended is generated if is not yet generated. The additional contiguous data record can be stored in either main store 132 or the differential store 134, preferably in the differential store 134.

In the process block 981 the attribute value to be appended is appended to the additional contiguous data record.

The process block 948 can comprise process blocks 982 and 983.

In the process block 982 an additional contiguous data record being a continuation of the contiguous data record used for storage of the attribute vector to which the identification vale is to be appended is generated if is not yet generated. The additional contiguous data record can be stored in either main store 132 or the differential store 134, preferably in the differential store 134.

In the process block 983 the identification value to be appended is appended to the additional contiguous data record.

After multiple execution of the process blocks 980-983 a substantial defragmentation of the data base can be created. In order to address this problem a defragmenting of the database can be executed in a process block 985. For instance, it the defragmenting can be executed when at least one of the following criteria of a second set is fulfilled: an amount of the attribute values and/or the identification values stored in the additional contiguous data record is bigger than a fifth threshold value, an overall data volume stored in the additional contiguous data records is bigger than a sixth threshold value, an amount of requests to execute an operation on the column-based database per time unit (e.g. second) is less than a seventh threshold value. The defragmenting of the column-based database comprises the following step of: appending the additional contiguous data record being the continuation of the respective contiguous data record to said respective contiguous data record. Preferably this step has to be executed multiple times in one batch, because it performs physical reallocation of memory. In this case the performance of the database will be less compromised.

The batch defragmentation is performed when the load of the column-store database is low and/or defragmentation of the column-store database is big, i.e. the volume of data stored in the additional contiguous data records is big. Batch execution of physical defragmentation of the column-store database enables optimum management of memory at physical level, because a change in a length of one or the contiguous data records requires as usual physical shifts of other contiguous data records in the main memory in order to provide compact allocation of the contiguous data records.

The process block 985 for the defragmenting of the database and the process block 929 for the purging of the column-based database can be executed simultaneously in one batch process, when at least one of the criteria of the first set or the second set is fulfilled. Execution of these process blocks can be organized in a way that each of the contiguous records to be processes is processed only once. For instance, if the step of the appending of the additional contiguous data record and the step of the deleting of all of the marked attribute values or all of the marked identification values are to be executed on the same contiguous data record, then one of these steps is executed immediately after another one of these steps. In this case physical reallocation of memory for each of the contiguous data records to be processed is made only once.

It should be appreciated that the present invention can be implemented in numerous ways, including as a process, an apparatus, a system, a computer processor executing software instructions, a mobile device, a smart device, a mobile application, or a computer readable medium such as a computer readable storage medium, or a computer network wherein program instructions are sent over optical or electronic communication or non-transitory links. It should be noted that the order of the steps of disclosed processes can be altered within the scope of the invention, as noted in the appended Claims and in the description herein.

Although the foregoing invention has been described in some detail for purposes of clarity of understanding, it will be apparent that certain changes and modifications can be practiced within the scope of the appended claims. The present invention can be practiced according to the claims without some or all of these specific details. For the purpose of clarity, technical material that is known in the technical fields related to the invention has not been described in detail so that the present invention is not unnecessarily obscured. It should be noted that there are many alternative ways of implementing both the process and apparatus of the present invention. Accordingly, the present embodiments are to be considered as illustrative and not restrictive, and the invention is not to be limited to the details given herein, but can be modified within the scope of the appended claims.

## Claims

1. An in-memory database system (100) comprising:
a column-based database (132) for storing data records (215) comprising attribute values (212) of attributes (211), the column-based database being stored in a main memory (130) of the in-memory database system,
a digital storage medium (150) storing processor-executable program code, and
a computing device (160) to execute the processor-executable program code in order to cause the computing device to execute the following steps of:
▪ storing, for each of the attributes, the attribute values of the each of the attributes as an attribute vector (213) in the column-based database, wherein positions of the attribute values in the attribute vector are indicative of their respective access keys (214), wherein each of the data records comprises the attribute values which have the same access key, wherein each of the attribute vectors is stored as a separate contiguous data record in the main memory, wherein at least some of the attribute vectors are stored encoded in the column-based database, wherein each of the encoded attribute vectors is encoded using a respective encoding dictionary (340), wherein each of the encoding dictionaries (340) comprises coding records (330), wherein each of the coding records comprises the attribute value and an identification value of the attribute value of the each of the encoding records, wherein the identification values are stored in the encoded attribute vectors instead of their respective attribute values (990); and
▪ storing the encoding dictionaries (340) in the main memory, wherein the coding entries in the encoding dictionaries are ordered according to their attribute values (991);
**characterized by**:
▪ storing decoding dictionaries (320) in the main memory, wherein each of the encoding dictionaries has the complementary decoding dictionary comprising the same coding entries as the each of the encoding dictionaries, wherein the coding entries in the decoding dictionaries are ordered according to their identification values (992);
wherein the execution of the processor-executable program code further causes the computing device to execute the following steps in response to receiving by the computing device a request to execute an operation on the column-based database from a database user, wherein the request comprises an instruction to add a new data record to the column-based database (940):
▪ identifying matching attributes of attribute values of the new data record and of the attribute vectors (941);
▪ identifying the attribute vectors having the identified attributes, wherein each of the attribute values of the new data record is to be appended to the respective identified attribute vector (942);
- if one of the encoding dictionaries is used for encoding of one of the identified attribute vectors to which one of the attribute values of the new data record is to be appended (943):
∘ if the one of the encoding dictionaries does not comprise a coding entry comprising the identification value of the one of the attribute values and the one of the attribute values (944), appending to the one of the encoding dictionaries and to the complementary decoding dictionary of the one of the encoding dictionaries the coding entry comprising the identification value of the one of the attribute values and the one of the attribute values, wherein the identification value of the one of the attribute values is unique for the entire encoding dictionary to which it is appended (945), otherwise identifying the identification value of the one of the attribute values in the respective coding entry of the one of the encoding dictionaries; and
∘ appending the identification value of the one of the attribute values to the one of the identified attribute vectors (946);
- - otherwise (943)
∘ appending the one of the attribute values to the one of the identified attribute vectors (948).

2. The in-memory database system of claim 1, wherein the attributes have assigned data types being indicative of a data type of the attribute values of the respective attribute vector, wherein at least some of the encoded attribute vectors comprising the encoded attribute values of the attributes to which the same data type is assigned, are encoded using the same encoding dictionary.

3. The in-memory database system of any one of the preceding claims, wherein the execution of the processor-executable program code further causes the computing device to execute the following steps in response to receiving by the computing device a request to execute an operation on the column-based database from a database user, wherein the request comprises an instruction to retrieve from the column-based database all data records comprising an attribute value specified in the request (900):
- if one of the encoding dictionary comprises the specified attribute value (901):
∘ identifying the encoding dictionary comprising the specified attribute value (902),
∘ identifying the respective identification value of the specified attribute value in the respective coding entry of the identified encoding dictionary (903),
∘ identifying all of the attribute vectors, which attribute values are encoded using the identified encoding dictionary and comprising the identified respective identification value (904), and
∘ identifying all of the access keys of the identified respective identification value in all of the identified contiguous attribute vectors (905),
- otherwise
∘ identifying all of the attribute vectors comprising the specified attribute value and all of the access keys of the specified data value in all of the identified attribute vectors comprising the specified attribute value (906);
▪ identifying, for each of the identified access keys, the respective data record and all of the attribute values of said respective data record having the each of the identified access keys, wherein if said identified respective data record comprises one or more of the identified attribute values encoded by one or more of the respective encoding dictionaries then the one or more of the encoded attribute values of said respective data record are decoded using one or more of the respective decoding dictionaries (907); and
▪ sending to the database user all identified data records and their attribute values (908).

4. The in-memory database system of any one of the preceding claims, wherein the execution of the processor-executable program code further causes the computing device to execute the following steps in response to receiving by the computing device a request to execute an operation on the column-based database from a database user, wherein the request comprises an instruction to delete in the column-based database all data records comprising an attribute value specified in the request (920):
- if one of the encoding dictionary comprises the specified attribute value (921):
∘ identifying the encoding dictionary comprising the specified attribute value (922),
∘ identifying the respective identification value of the specified attribute value in the respective coding entry of the identified encoding dictionary (923),
∘ identifying all of the attribute vectors, which attribute values are encoded using the identified encoding dictionary and comprising the identified respective identification value (924), and
∘ identifying all of the access keys of the identified respective identification value in all of the respective attribute vectors (925);
∘
- otherwise (921)
∘ identifying all of the attribute vectors comprising the specified attribute value and all of the access keys of the specified data value in all of the identified attribute vectors comprising the specified attribute value (927); and
▪ assigning a marker, for each of the identified access keys, to the respective data record and to all of the either encoded or not encoded attribute values of said respective data record having the each of the identified access keys, the assignment of the marker to either the data record, or the attribute value, or the identification value being indicative that it is excluded from processing when the requests to execute an operation on the column-based database from database users are executed (928).

5. The in-memory database system claim 4, wherein the execution of the processor-executable program code further causes the computing device to execute the following step after the identifying of the respective identification value of the specified attribute value in the respective coding entry of the identified encoding dictionary:
∘ deleting the coding entry comprising the specified attribute value in the identified encoding dictionary and in the complementary decoding dictionary of the identified encoding dictionary (926).

6. The in-memory database system of one of the preceding claims 4 or 5, wherein the execution of the processor-executable program code further causes the computing device to execute the following step of:
▪ purging the column-based database, wherein the purging of the column-based database is executed (929), when at least one of the following criteria of the first set is fulfilled:
- an amount of the marked attribute values is bigger than a first threshold value,
- an amount of the marked identification values is bigger than a second threshold value,
- an amount of the marked data records is bigger than a third threshold value,
- an amount of requests to execute an operation on the column-based database per time unit is less than a fourth threshold value;
wherein the purging of the column-based database comprises the following steps of:
∘ deleting all of the marked attribute values in the attribute vector comprising the marked attribute value and in its respective contiguous record, wherein after the deleting of all of the marked attribute values contiguousness of the contiguous data record, in which all of the marked attribute values are deleted, is maintained; and
∘ deleting all of the marked identification values in the attribute vector comprising the marked identification value and in its respective contiguous record, wherein after the deleting of all of the marked identification values contiguousness of the contiguous data record, in which all of the marked attribute values are deleted, is maintained.

7. The in-memory database system of claim 1, wherein the appending of the identified identification value to the one of the identified attribute vectors comprises the following steps of:
∘ generating an additional contiguous data record being a continuation of the contiguous data record used for storage of the one of the identified attribute vectors if the additional contiguous data record is not yet generated; and
∘ appending the one of the identified identification values to the additional contiguous data record; and
wherein the appending of the one of the attribute values to the one of the identified vectors comprises the following steps of:
∘ generating another additional contiguous data record being a continuation of the contiguous data record used for storage of the one of the identified attribute vectors if the additional contiguous data record is not yet generated; and
∘ appending the one of the attribute values to the additional contiguous data record;
wherein the execution of the processor-executable program code further causes the computing device to execute the following step of:
▪ defragmenting the column-based database, wherein the defragmenting of the column-based database if executed, when at least one of the following criteria of the second set is fulfilled:
- an amount of the attribute values and/or the identification values stored in the additional contiguous data record is bigger than a fifth threshold value,
- an overall data volume stored in the additional contiguous data records is bigger than a sixth threshold value,
- an amount of requests to execute an operation on the column-based database per time unit is less than a seventh threshold value;
wherein the defragmenting of the column-based database comprises the following step of:
∘ appending the additional contiguous data record being the continuation of the respective contiguous data record to said respective contiguous data record.

8. The in-memory database system of claims 7 and 6, wherein the defragmenting of the column-based database and the performing of the purging of the column-based database are executed simultaneously, when at least one of the criteria of the first set or the second set is fulfilled, wherein if the step of the appending of the additional contiguous data record and the step of the deleting of all of the marked attribute values or all of the marked identification values are to be executed on the same contiguous data record, when the defragmenting of the column-based database and the purging of the column-based database are simultaneously executed, then one of these steps is executed immediately after another one of these steps.

9. The in-memory database system of claims one of the claims 1 or 7, wherein the identification values are nonnegative integer numbers, wherein the appending to the one of the encoding dictionaries and to the complimentary decoding dictionary of the one of the encoding dictionaries the coding entry comprising the identification value of the one of the attribute values and the one of the attribute values (945) comprises the following step of:
∘ assigning a value to the identification value of the one of the attribute values, wherein the assigned value is the least allowable number (690);
wherein the execution of the processor-executable program code further causes the computing device to execute the following steps after the appending to the one of the encoding dictionaries and to the complimentary decoding dictionary of the one of the encoding dictionaries the coding entry comprising the identification value of the one of the attribute values and the one of the attribute values:
∘ sorting the coding entries in the one of the encoding dictionaries according to their attribute values (962); and
∘ sorting the coding entries in the complimentary decoding dictionary of the one of the encoding dictionaries according to their identification values, if the assigned value is not bigger than any of the identification values in the one of the encoding dictionaries and the complimentary decoding dictionary of the one of the encoding dictionaries before the appending to them the coding entry comprising the identification value of the one of the attribute values and the one of the attribute values (963).

10. The in-memory database system of one of the claims 1 or 7, wherein the identification values are nonnegative integer numbers, wherein the appending to the one of the encoding dictionaries and to the complimentary decoding dictionary of the one of the encoding dictionaries the coding entry comprising the identification value of the one of the attribute values and the one of the attribute values (945) comprises the following step of:
∘ assigning a value to the identification value of the one of the attribute values, wherein the assigned value is bigger than any of the identification values in the one of the encoding dictionaries and the complimentary decoding dictionary of the one of the encoding dictionaries before the appending to them the coding entry comprising the identification value of the one of the attribute values and the one of the attribute values (970);
wherein the execution of the processor-executable program code further causes the computing device to execute the following step after the appending to the one of the encoding dictionaries and to the complimentary decoding dictionary of the one of the encoding dictionaries the coding entry comprising the identification value of the one of the attribute values and the one of the attribute values:
∘ sorting the coding entries in the one of the encoding dictionaries according to their attribute values (971).

11. A computer-implemented method for operating an in-memory database system (100), the in-memory database comprising:
a column-based database (132) for storing data records (215) comprising attribute values (212) of attributes (211), the column-based database being stored in a main memory (130) of the in-memory database system;
a digital storage medium (150) storing processor-executable program code; and
a computing device (160) to execute the processor-executable program code in order to cause the computing device to execute the computer-implemented method, the computer-implemented method comprising the following steps:
▪ storing, for each of the attributes, the attribute values of the each of the attributes as an attribute vector (213) in the column-based database, wherein positions of the attribute values in the attribute vector are indicative of their respective access keys (214), wherein each of the data records comprises the attribute values which have the same access key, wherein each of the attribute vectors is stored as a separate contiguous data record in the main memory, wherein at least some of the attribute vectors are stored encoded in the column-based database, wherein each of the encoded attribute vectors is encoded using a respective encoding dictionary (340), wherein each of the encoding dictionaries comprises coding records (330), wherein each of the coding records comprises the attribute value and an identification value of the attribute value of the each of the encoding records, wherein the identification values are stored in the encoded attribute vectors instead of their respective attribute values (990);
▪ storing the encoding dictionaries (340) in the main memory, wherein the coding entries in the encoding dictionaries are ordered according to their attribute values (991); and
▪ storing decoding dictionaries (320) in the main memory, wherein each of the encoding dictionary has the complementary decoding dictionary comprising the same coding entries as the each of the encoding dictionaries, wherein the coding entries in the decoding dictionaries are ordered according to their identification values (992), wherein the execution of the processor-executable program code further causes the computing device to execute the following steps of the computer-implemented method in response to receiving by the computing device a request to execute an operation on the column-based database from a database user, wherein the request comprises an instruction to add a new data record to the column-based database (940):
▪ identifying matching attributes of attribute values of the new data record and of the attribute vectors (941);
▪ identifying the attribute vectors having the identified attributes, wherein each of the attribute values of the new data records is to be appended to the respective identified attribute vector (942);
- if one of the encoding dictionaries is used for encoding of one of the identified attribute vectors to which one of the attribute values of the new data record is to be appended (943):
∘ if the one of the encoding dictionaries does not comprise a coding entry comprising the identification value of the one of the attribute values and the one of the attribute values (944), appending to the one of the encoding dictionaries and to the complementary decoding dictionary of the one of the encoding dictionaries the coding entry comprising the identification value of the one of the attribute values and the one of the attribute values, wherein the identification value of the one of the attribute values is unique for the entire encoding dictionary to which it is appended (945), otherwise identifying the identification value of the one of the attribute values in the respective coding entry of the one of the encoding dictionaries; and
∘ appending the identification value of the one of the attribute values to the one of the identified attribute vectors (946);
- - otherwise (943)
∘ appending the one of the attribute values to the one of the identified vectors (948),

12. The computer-implemented method of claim 11, wherein the identification values are nonnegative integer numbers, wherein the appending to the one of the encoding dictionaries and to the complementary decoding dictionary of the one of the encoding dictionaries the coding entry comprising the identification value of the one of the attribute values and the one of the attribute values (945) comprises the step of:
∘ assigning a value to the identification value of the one of the attribute values, wherein the assigned value is the least allowable number (960);
wherein the execution of the processor-executable program code further causes the computing device to execute the following steps of the computer-implemented method after the appending to the one of the encoding dictionaries and to the complementary decoding dictionary of the one of the encoding dictionaries the coding entry comprising the identification value of the one of the attribute values and the one of the attribute values:
∘ sorting the coding entries in the one of the encoding dictionaries according to their attribute values (962); and
∘ sorting the coding entries in the complementary decoding dictionary of the one of the encoding dictionaries according to their identification values, if the assigned value is not bigger than any of the identification values in the one of the encoding dictionaries and the complementary decoding dictionary of the one of the encoding dictionaries before the appending to them the coding entry comprising the identification value of the one of the attribute values and the one of the attribute values (963).

13. The computer-implemented method of one of claims 11 or 12, wherein the execution of the processor-executable program code further causes the computing device to execute the following steps in response to receiving by the computing device a request to execute an operation on the column-based database from a database user, wherein the request comprises an instruction to retrieve from the column-based database all data records comprising an attribute value specified in the request (900):
- if one of the encoding dictionary comprises the specified attribute value (901):
∘ identifying the encoding dictionary comprising the specified attribute value (902),
∘ identifying the respective identification value of the specified attribute value in the respective coding entry of the identified encoding dictionary (903),
o identifying all of the attribute vectors, which attribute values are encoded using the identified encoding dictionary and comprising the identified respective identification value (904), and
∘ identifying all of the access keys of the identified respective identification value in all of the identified contiguous attribute vectors (905),
- otherwise
∘ identifying all of the attribute vectors comprising the specified attribute value and all of the access keys of the specified data value in all of the identified attribute vectors comprising the specified attribute value (906);
▪ identifying, for each of the identified access keys, the respective data record and all of the attribute values of said respective data record having the each of the identified access keys, wherein if said identified respective data record comprises one or more of the identified attribute values encoded by one or more of the respective encoding dictionaries then the one or more of the encoded attribute values of said respective data record are decoded using one or more of the respective decoding dictionaries (907); and
▪ sending to the database user all identified data records and their attribute values (908).

14. The computer-implemented method of one of claims 11 - 13, wherein the execution of the processor-executable program code further causes the computing device to execute the following steps in response to receiving by the computing device a request to execute an operation on the column-based database from a database user, wherein the request comprises an instruction to delete in the column-based database all data records comprising an attribute value specified in the request (920):
- if one of the encoding dictionary comprises the specified attribute value (921):
∘ identifying the encoding dictionary comprising the specified attribute value (922),
∘ identifying the respective identification value of the specified attribute value in the respective coding entry of the identified encoding dictionary (923),
∘ identifying all of the attribute vectors, which attribute values are encoded using the identified encoding dictionary and comprising the identified respective identification value (924), and
∘ identifying all of the access keys of the identified respective identification value in all of the respective attribute vectors (925);
∘
- otherwise (921)
∘ identifying all of the attribute vectors comprising the specified attribute value and all of the access keys of the specified data value in all of the identified attribute vectors comprising the specified attribute value (927); and
▪ assigning a marker, for each of the identified access keys, to the respective data record and to all of the either encoded or not encoded attribute values of said respective data record having the each of the identified access keys, the assignment of the marker to either the data record, or the attribute value, or the identification value being indicative that it is excluded from processing when the requests to execute an operation on the column-based database from database users are executed (928).

15. A computer readable medium having stored thereon a computer executable program code for execution by a computer processor controlling a computing device of an in-memory database system, wherein execution of the instructions of the executable program code causes the computer processor controlling the computing device to perform the computer-implemented method of claims 11-14 on the in-memory database system.

## Patentansprüche

1. In-Memory-Datenbanksystem (100), umfassend:
eine spaltenbasierte Datenbank (132) zum Speichern von Datenaufzeichnungen (215), die Attributwerte (212) von Attributen (211) umfassen, wobei die spaltenbasierte Datenbank in einem Hauptspeicher (130) des In-Memory-Datenbanksystems gespeichert ist,
ein digitales Speichermedium (150), das prozessorausführbaren Programmcode speichert, und
eine Rechenvorrichtung (160), um den prozessorausführbaren Programmcode auszuführen, um zu bewirken, dass die Rechenvorrichtung die folgenden Schritte ausführt:
▪ für jedes von den Attributen: Speichern der Attributwerte der jeweiligen Attribute als Attributvektor (213) in der spaltenbasierten Datenbank, wobei Positionen der Attributwerte im Attributvektor ihre entsprechenden Zugriffsschlüssel (214) angeben, wobei jede von den Datenaufzeichnungen die Attributwerte umfasst, die den gleichen Zugriffsschlüssel aufweisen, wobei jeder von den Attributvektoren als separate Anschluss-Datenaufzeichnung im Hauptspeicher gespeichert wird, wobei zumindest einige der Attributvektoren kodiert in der spaltenbasierten Datenbank gespeichert werden, wobei jeder von den kodierten Attributvektoren unter Verwendung eines entsprechenden Kodierungswörterbuchs (340) kodiert wird, wobei jedes von den Kodierungswörterbüchern (340) Kodierungsaufzeichnungen (330) umfasst, wobei jede von den Kodierungsaufzeichnungen den Attributwert und einen Identifikationswert des Attributwerts der jeweiligen Kodierungsaufzeichnung umfasst, wobei die Identifikationswerte anstelle ihrer entsprechenden Attributwerte in den kodierten Attributvektoren gespeichert werden (990); und
▪ Speichern der Kodierungswörterbücher (340) im Hauptspeicher, wobei die Kodierungseinträge in den Kodierungswörterbüchern gemäß ihren Attributwerten geordnet sind (991);
**gekennzeichnet durch**:
▪ Speichern von Dekodierungswörterbüchern (320) im Hauptspeicher, wobei jedes der Kodierungswörterbücher das komplementäre Dekodierungswörterbuch aufweist, das die gleichen Kodierungseinträge aufweist wie das jeweilige Kodierungswörterbuch, wobei die Kodierungseinträge in den Dekodierungswörterbüchern gemäß ihrer Identifikationswerten geordnet sind (992);
wobei die Ausführung des prozessorausführbaren Programmcodes ferner bewirkt, dass die Rechenvorrichtung als Reaktion auf den Empfang einer Aufforderung von einem Datenbanknutzer, eine Operation an der spaltenbasierten Datenbank auszuführen, die folgenden Schritte ausführt, wobei die Aufforderung einen Befehl umfasst zum Hinzufügen einer neuen Datenaufzeichnung zur spaltenbasierten Datenbank (940):
▪ Identifizieren zueinander passender Attribute von Attributwerten der neuen Datenaufzeichnung und der Attributvektoren (941);
▪ Identifizieren der Attributvektoren mit den identifizierten Attributen, wobei jeder von den Attributwerten der neuen Datenaufzeichnung an den entsprechenden identifizierten Attributvektor anzuhängen ist (942);
- wenn eines der Kodierungswörterbücher verwendet wird, um einen der identifizierten Attributvektoren zu kodieren, an die einer der Attributwerte der neuen Datenaufzeichnung angehängt werden soll (943):
∘ wenn das eine von den Kodierungswörterbüchern keinen Kodierungseintrag umfasst, der den Identifikationswert des einen von den Attributwerten und den einen von den Attributwerten umfasst (944), Anhängen des Kodierungseintrags, der den Identifikationswert des einen von den Atrributwerten und den einen von den Attributwerten umfasst, an das eine von den Kodierungswörterbüchern und an das komplementäre Dekodierungswörterbuch, wobei der Identifikationswert des einen von den Attributwerten für das gesamte Kodierungswörterbuch, dem er angehängt wird, eindeutig ist (945), andernfalls Identifizieren des Identifikationswerts des einen von den Attributwerten im entsprechenden Kodierungseintrag des einen von den Kodierungswörterbüchern; und
∘ Anhängen des Identifikationswerts des einen von den Attributwerten an den einen von den identifizierten Attributvektoren (946);
- andernfalls (943)
∘ Anhängen des einen von den Attributwerten an den einen von den identifizierten Attributvektoren (948).

2. In-Memory-Datenbanksystem nach Anspruch 1, wobei den Attributen Datentypen zugeordnet sind, die einen Datentyp der Attributwerte des entsprechenden Attributvektors angeben, wobei zumindest einige von den kodierten Attributvektoren, welche die kodierten Attributwerte der Attribute umfassen, denen der gleiche Datentyp zugeordnet ist, unter Verwendung desselben Kodierungswörterbuchs kodiert sind.

3. In-Memory-Datenbanksystem nach einem der vorangehenden Ansprüche, wobei die Ausführung des prozessorausführbaren Programmcodes ferner bewirkt, dass die Rechenvorrichtung als Reaktion auf den Empfang einer Aufforderung von einem Datenbanknutzer, eine Operation an der spaltenbasierten Datenbank auszuführen, die folgenden Schritte ausführt, wobei die Aufforderung einen Befehl umfasst zum Abrufen sämtlicher Datenaufzeichnungen, die einen Attributwert umfassen, der in der Aufforderung spezifiziert wird, aus der spaltenbasierten Datenbank (900):
- wenn eines der Kodierungswörterbücher den spezifizierten Attributwert umfasst (901):
∘ Identifizieren des Kodierungswörterbuchs, das den spezifizierten Attributwert umfasst (902),
∘ Identifizieren des entsprechenden Identifikationswerts des spezifizierten Attributwerts im entsprechenden Kodierungseintrag des identifizierten Kodierungswörterbuchs (903),
∘ Identifizieren sämtlicher Attributvektoren, deren Attributwerte unter Verwendung des identifizierten Kodierungswörterbuchs kodiert sind und die den entsprechenden Identifikationswert umfassen (904), und
∘ Identifizieren sämtlicher Zugriffsschlüssel des entsprechenden identifizierten Identifikationswerts in sämtlichen identifizierten Anschluss-Attributvektoren (905),
- andernfalls
∘ Identifizieren sämtlicher Attributvektoren, die den spezifizierten Attributwert umfassen, und sämtlicher Zugriffsschlüssel des spezifizierten Datenwerts in sämtlichen identifizierten Attributvektoren, die den spezifizierten Attributwert umfassen (906);
▪ für jeden von den identifizierten Zugriffsschlüsseln: Identifizieren der entsprechenden Datenaufzeichnung und sämtlicher Attributwerte der entsprechenden Datenaufzeichnung, die den jeweiligen identifizierten Zugriffsschlüssel aufweist, wobei dann, wenn die entsprechende identifizierte Datenaufzeichnung einen oder mehrere von den identifizierten Attributwerten umfasst, die von einem oder mehreren von den entsprechenden Kodierungswörterbüchern kodiert sind, der eine oder die mehreren von den kodierten Attributwerten der entsprechenden Datenaufzeichnung unter Verwendung eines oder mehrerer der entsprechenden Dekodierungswörterbücher dekodiert wird bzw. werden (907); und
▪ Senden sämtlicher identifizierter Datenaufzeichnungen und ihrer Attributwerte an den Datenbanknutzer (908).

4. In-Memory-Datenbanksystem nach einem der vorangehenden Ansprüche, wobei die Ausführung des prozessorausführbaren Programmcodes ferner bewirkt, dass die Rechenvorrichtung als Reaktion auf den Empfang einer Aufforderung zur Ausführung einer Operation an der spaltenbasierten Datenbank von einem Datenbanknutzer die folgenden Schritte ausführt, wobei die Aufforderung einen Befehl umfasst zum Löschen sämtlicher Datenaufzeichnungen, die einen Attributwert umfassen, der in der Aufforderung spezifiziert wird, aus der spaltenbasierten Datenbank (920):
- wenn eines der Kodierungswörterbücher den spezifizierten Attributwert umfasst (921):
∘ Identifizieren des Kodierungswörterbuchs, das den spezifizierten Attributwert(922) umfasst,
∘ Identifizieren des entsprechenden Identifikationswerts des spezifizierten Attributwerts im entsprechenden Kodierungseintrag des identifizierten Kodierungswörterbuchs (923),
∘ Identifizieren sämtlicher Attributvektoren, deren Attributwerte unter Verwendung des identifizierten Kodierungswörterbuchs kodiert sind und die den entsprechenden Identifikationswert umfassen (924), und
∘ Identifizieren sämtlicher Zugriffsschlüssel des entsprechenden identifizierten Identifikationswerts in sämtlichen entsprechenden Attributvektoren (925),
- andernfalls (921)
∘ Identifizieren sämtlicher Attributvektoren, die den spezifizierten Attributwert umfassen, und sämtlicher Zugriffsschlüssel des spezifizierten Datenwerts in sämtlichen identifizierten Attributvektoren, die den spezifizierten Attributwert umfassen (927); und
▪ für jeden von den identifizierten Zugriffsschlüsseln: Zuweisen eines Markers zur entsprechenden Datenaufzeichnung und zu sämtlichen entweder kodierten oder unkodierten Attributwerten der entsprechenden Datenaufzeichnung, die den jeweiligen identifizierten Zugriffsschlüssel aufweist, wobei die Zuweisung des Markers zu entweder der Datenaufzeichnung oder dem Attributwert oder dem Identifikationswert angibt, dass er bzw. sie von der Verarbeitung ausgeschlossen ist, wenn die Aufforderungen von Datenbanknutzern zur Ausführung einer Operation an der spaltenbasierten Datenbank ausgeführt werden (928).

5. In-Memory-Datenbanksystem nach Anspruch 4, wobei die Ausführung des prozessorausführbaren Programmcodes ferner bewirkt, dass die Rechenvorrichtung den folgenden Schritt nach der Identifizierung des entsprechenden Identifikationswerts des spezifizierten Attributwerts im entsprechenden Kodierungseintrag des identifizierten Kodierungswörterbuchs ausführt:
∘ Löschen des Kodierungseintrags, der den spezifizierten Attributwert umfasst, im identifizierten Kodierungswörterbuch und im komplementären Dekodierungswörterbuch des identifizierten Kodierungswörterbuchs (926).

6. In-Memory-Datenbanksystem nach einem der vorangehenden Ansprüche 4 oder 5, wobei die Ausführung des prozessorausführbaren Programmcodes ferner bewirkt, dass die Rechenvorrichtung den folgenden Schritt ausführt:
▪ Säubern der spaltenbasierten Datenbank, wobei das Säubern der spaltenbasierten Datenbank ausgeführt wird (929), wenn mindestens eines der folgenden Kriterien des ersten Satzes erfüllt ist:
- eine Menge der markierten Attributwerte ist größer als ein erster Schwellenwert,
- eine Menge der markierten Identifikationswerte ist größer als ein zweiter Schwellenwert,
- eine Menge der markierten Datenaufzeichnungen ist größer als ein dritter Schwellenwert,
- eine Menge von Aufforderungen zur Ausführung einer Operation an der spaltenbasierten Datenbank pro Zeiteinheit ist kleiner als ein vierter Schwellenwert;
wobei das Säubern der spaltenbasierten Datenbank die folgenden Schritte umfasst:
∘ Löschen sämtlicher markierter Attributwerte im Attributvektor, der den markierten Attributwert umfasst, und in seiner entsprechenden Anschlussaufzeichnung, wobei nach dem Löschen sämtlicher markierter Attributwerte eine Kontiguität der Anschluss-Datenaufzeichnung, in der alle von den markierten Attributwerten gelöscht worden sind, aufrechterhalten wird; und
∘ Löschen sämtlicher markierter Identifikationswerte im Attributvektor, der den markierten Identifikationswert umfasst, und in seiner entsprechenden Anschlussaufzeichnung, wobei nach dem Löschen sämtlicher markierter Identifikationswerte eine Kontiguität der Anschluss-Datenaufzeichnung, in der alle von den markierten Attributwerten gelöscht worden sind, aufrechterhalten wird.

7. In-Memory-Datenbanksystem nach Anspruch 1, wobei das Anhängen des identifizierten Identifikationswerts an den einen von den identifizierten Attributvektoren die folgenden Schritte umfasst:
∘ Erzeugen einer zusätzlichen Anschluss-Datenaufzeichnung, die eine Fortsetzung der Anschluss-Datenaufzeichnung ist, die zum Speichern des einen von den identifizierten Attributvektoren verwendet wird, wenn die zusätzliche Anschluss-Datenaufzeichnung noch nicht erzeugt worden ist; und
∘ Anhängen des einen von den identifizierten Identifikationswerten an die zusätzliche Anschluss-Datenaufzeichnung; und
wobei das Anhängen des einen von den Attributwerten an den einen von den identifizierten Vektoren die folgenden Schritte umfasst:
∘ Erzeugen einer anderen zusätzlichen Anschluss-Datenaufzeichnung, die eine Fortsetzung der Anschluss-Datenaufzeichnung ist, die zum Speichern des einen von den identifizierten Attributvektoren verwendet wird, wenn die zusätzliche Anschluss-Datenaufzeichnung noch nicht erzeugt worden ist; und
∘ Anhängen des einen von Attributwerten an die zusätzliche Anschluss-Datenaufzeichnung;
wobei die Ausführung des prozessorausführbaren Programmcodes ferner bewirkt, dass die Rechenvorrichtung den folgenden Schritt ausführt:
▪ Defragmentieren der spaltenbasierten Datenbank, wobei das Defragmentieren der spaltenbasierten Datenbank ausgeführt wird, wenn mindestens eines der folgenden Kriterien des zweiten Satzes erfüllt ist:
- eine Menge der Attributwerte und/oder der Identifikationswerte, die in der zusätzlichen Anschluss-Datenaufzeichnung gespeichert sind, ist größer als ein fünfter Schwellenwert,
- ein Gesamtdatenvolumen, das in den zusätzlichen Anschluss-Datenaufzeichnungen gespeichert ist, ist größer als ein sechster Schwellenwert,
- eine Menge der Aufforderungen zum Ausführen einer Operation an der spaltenbasierten Datenbank pro Zeiteinheit ist kleiner als ein siebter Schwellenwert;
wobei das Defragmentieren der spaltenbasierten Datenbank den folgenden Schritt umfasst:
∘ Anhängen der zusätzlichen Anschluss-Datenaufzeichnung, bei der es sich um die Fortsetzung der entsprechenden Anschluss-Datenaufzeichnung handelt, an die entsprechende Anschluss-Datenaufzeichnung.

8. In-Memory-Datenbanksystem nach den Ansprüchen 7 und 6, wobei die Defragmentierung der spaltenbasierten Datenbank und die Durchführung der Säuberung der spaltenbasierten Datenbank gleichzeitig ausgeführt werden, wenn mindestens eines der Kriterien des ersten Satzes oder des zweiten Satzes erfüllt ist, wobei in einem Fall, wo der Schritt des Anhängens der zusätzlichen Anschluss-Datenaufzeichnung und der Schritt des Löschens sämtlicher markierter Attributwerte oder sämtlicher markierter Identifikationswerte an derselben Anschluss-Datenaufzeichnung ausgeführt werden sollen, dann, wenn die Defragmentierung der spaltenbasierten Datenbank und das Säubern der spaltenbasierten Datenbank gleichzeitig ausgeführt werden, einer dieser Schritte unmittelbar nach einem anderen dieser Schritte ausgeführt wird.

9. In-Memory-Datenbanksystem nach einem der Ansprüche 1 oder 7, wobei die Identifikationswerte nicht-negative ganze Zahlen sind, wobei das Anhängen des Kodierungseintrags, der den Identifikationswert des einen von den Attributwerten und den einen von den Attributwerten umfasst, an das eine von den Kodierungswörterbüchern und an das komplementäre Dekodierungswörterbuch des einen von den Kodierungswörterbüchern (945) den folgenden Schritt umfasst:
∘ Zuweisen eines Wertes zum Identifikationswert von dem einen von den Attributwerten, wobei der zugewiesene Wert die kleinste zulässige Zahl ist (690);
wobei die Ausführung des prozessorausführbaren Programmcodes ferner bewirkt, dass die Rechenvorrichtung die folgenden Schritte nach dem Anhängen des Kodierungseintrags, der den Identifikationswert des einen von den Attributwerten und den einen von den Attributwerten umfasst, an das eine von den Kodierungswörterbüchern und an das komplementäre Dekodierungswörterbuch des einen von den Kodierungswörterbüchern ausführt:
∘ Sortieren der Kodierungseinträge in dem einen von den Kodierungswörterbüchern gemäß ihren Attributwerten (962); und
∘ Sortieren der Kodierungseinträge im komplementären Dekodierungswörterbuch des einen von den Kodierungswörterbüchern gemäß ihren Identifikationswerten, wenn der zugewiesene Wert nicht größer ist als irgendeiner der Identifikationswerte in dem einen von den Kodierungswörterbüchern und dem komplementären Dekodierungswörterbuch des einen von den Kodierungswörterbüchern, bevor der Kodierungseintrag, der den Identifikationswert des einen von den Attributwerten und den einen von den Attributwerten umfasst, daran angehängt wird (963).

10. In-Memory-Datenbanksystem nach einem der Ansprüche 1 oder 7, wobei die Identifikationswerte nicht-negative ganze Zahlen sind, wobei das Anhängen des Kodierungseintrags, der den Identifikationswert des einen von den Attributwerten und den einen von den Attributwerten umfasst, an das eine von den Kodierungswörterbüchern und an das komplementäre Dekodierungswörterbuch des einen von den Kodierungswörterbüchern (945) den folgenden Schritt umfasst:
∘ Zuweisen eines Wertes zum Identifikationswert des einen von den Attributwerten, wobei der zugewiesene Wert größer ist als irgendeiner der Identifikationswerte in dem einen von den Kodierungswörterbüchern und dem komplementären Dekodierungswörterbuch des einen von den Kodierungswörterbüchern, bevor der Kodierungseintrag, der den Identifikationswert des einen von den Attributwerten und den einen von den Attributwerten umfasst, daran angehängt wird (970);
wobei die Ausführung des prozessorausführbaren Programmcodes ferner bewirkt, dass die Rechenvorrichtung nach dem Anhängen des Kodierungseintrags, der den Identifikationswert des einen von den Attributwerten und den einen von den Attributwerten umfasst, an das eine von den Kodierungswörterbüchern und an das komplementäre Dekodierungswörterbuch des einen von den Kodierungswörterbüchern die folgenden Schritte ausführt:
∘ Sortieren der Kodierungseinträge in dem einen von den Kodierungswörterbüchern gemäß ihren Attributwerten (971).

11. Computerimplementiertes Verfahren zum Betreiben eines In-Memory-Datenbanksystems (100), wobei das In-Memory-Datenbanksystem umfasst:
eine spaltenbasierte Datenbank (132) zum Speichern von Datenaufzeichnungen (215), die Attributwerte (212) von Attributen (211) umfassen, wobei die spaltenbasierte Datenbank in einem Hauptspeicher (130) des In-Memory-Datenbanksystems gespeichert ist;
ein digitales Speichermedium (150), das prozessorausführbaren Programmcode speichert; und
eine Rechenvorrichtung (160), um den prozessorausführbaren Programmcode auszuführen, um zu bewirken, dass die Rechenvorrichtung das computerimplementierte Verfahren ausführt, wobei das computerimplementierte Verfahren die folgenden Schritte umfasst:
▪ für jedes von den Attributen: Speichern der Attributwerte des jeweiligen Attributs als Attributvektor (213) in der spaltenbasierten Datenbank, wobei Positionen der Attributwerte im Attributvektor ihre entsprechenden Zugriffsschlüssel (214) angeben, wobei jede von den Datenaufzeichnungen die Attributwerte umfasst, die den gleichen Zugriffsschlüssel aufweisen, wobei jeder von den Attributvektoren als separate Anschluss-Datenaufzeichnung im Hauptspeicher gespeichert wird, wobei zumindest einige der Attributvektoren kodiert in der spaltenbasierten Datenbank gespeichert werden, wobei jeder von den kodierten Attributvektoren unter Verwendung eines entsprechenden Kodierungswörterbuchs (340) kodiert wird, wobei jedes von den Kodierungswörterbüchern Kodierungsaufzeichnungen (330) umfasst, wobei jede der Kodierungsaufzeichnungen den Attributwert und einen Identifikationswert des Attributwerts der jeweiligen Kodierungsaufzeichnung umfasst, wobei die Identifikationswerte anstelle ihrer entsprechenden Attributwerte in den kodierten Attributvektoren gespeichert werden (990);
▪ Speichern der Kodierungswörterbücher (340) im Hauptspeicher, wobei die Kodierungseinträge in den Kodierungswörterbüchern gemäß ihren Attributwerten geordnet werden (991); und
▪ Speichern von Dekodierungswörterbüchern (320) im Hauptspeicher, wobei jedes der Kodierungswörterbücher das komplementäre Dekodierungswörterbuch aufweist, das die gleichen Kodierungseinträge aufweist wie das jeweilige Kodierungswörterbuch, wobei die Kodierungseinträge in den Dekodierungswörterbüchern gemäß ihren Identifikationswerten geordnet werden (992), wobei die Ausführung des prozessorausführbaren Programmcodes ferner bewirkt, dass die Rechenvorrichtung als Reaktion auf den Empfang einer Aufforderung von einem Datenbanknutzer, eine Operation an der spaltenbasierten Datenbank auszuführen, die folgenden Schritte des computerimplmentierten Verfahrens ausführt, wobei die Aufforderung einen Befehl zum Hinzufügen einer neuen Datenaufzeichnung zur spaltenbasierten Datenbank umfasst (940):
▪ Identifizieren zueinander passender Attribute von Attributwerten der neuen Datenaufzeichnung und der Attributvektoren (941);
▪ Identifizieren der Attributwerte, welche die identifizierten Attribute aufweisen, wobei jeder der Attributwerte der neuen Datenaufzeichnungen an den entsprechenden identifizierten Attributvektor anzuhängen ist (942);
- wenn eines der Kodierungswörterbücher verwendet wird, um einen der identifizierten Attributvektoren zu kodieren, an die einer der Attributwerte der neuen Datenaufzeichnung angehängt werden soll (943):
∘ wenn das eine von den Kodierungswörterbüchern keinen Kodierungseintrag umfasst, der den Identifikationswert des einen von den Attributwerten und den einen von den Attributwerten umfasst, (944), Anhängen des Kodierungseintrags, der den Identifikationswert des einen von den Atrributwerten und den einen von den Attributwerten umfasst, an das eine von den Kodierungswörterbüchern und an das komplementäre Dekodierungswörterbuch des einen von den Kodierungswörterbüchern, wobei der Identifikationswert des einen von den Attributwerten für das gesamte Kodierungswörterbuch, dem er angehängt wird, eindeutig ist (945), andernfalls Identifizieren des Identifikationswerts des einen von den Attributwerten im entsprechenden Kodierungseintrag des einen von den Kodierungswörterbüchern; und
∘ Anhängen des Identifikationswerts des einen von den Attributwerten an den einen von den identifizierten Attributvektoren (946);
- andernfalls (943)
∘ Anhängen des einen von den Attributwerten an den einen von den identifizierten Vektoren (948),

12. Computerimplementiertes Verfahren nach Anspruch 11, wobei die Identifikationswerte nicht-negative ganze Zahlen sind, wobei das Anhängen des Kodierungseintrags, der den Identifikationswert des einen von den Attributwerten und den einen von den Attributwerten umfasst, an das eine von den Kodierungswörterbüchern und an das komplementäre Dekodierungswörterbuch des einen von den Kodierungswörterbüchern (945) den folgenden Schritt umfasst:
∘ Zuweisen eines Wertes zum Identifikationswert von dem einen von den Attributwerten, wobei der zugewiesene Wert die kleinste zulässige Zahl ist (960);
wobei die Ausführung des prozessorausführbaren Programmcodes ferner bewirkt, dass die Rechenvorrichtung nach dem Anhängen des Kodierungseintrags, der den Identifikationswert des einen von den Attributwerten und den einen von den Attributwerten umfasst, an das eine von den Kodierungswörterbüchern und an das komplementäre Dekodierungswörterbuch des einen von den Kodierungswörterbüchern die folgenden Schritte des computerimplementierten Verfahrens ausführt:
∘ Sortieren der Kodierungseinträge in dem einen von den Kodierungswörterbüchern gemäß ihren Attributwerten (962); und
∘ Sortieren der Kodierungseinträge im komplementären Dekodierungswörterbuch des einen von den Kodierungswörterbüchern gemäß ihren Identifikationswerten, wenn der zugewiesene Wert nicht größer ist als irgendeiner der Identifikationswerte in dem einen von den Kodierungswörterbüchern und dem komplementären Dekodierungswörterbuch des einen von den Kodierungswörterbüchern, bevor der Kodierungseintrag, der den Identifikationswert des einen von den Attributwerten und den einen von den Attributwerten umfasst, daran angehängt wird (963).

13. Computerimplementiertes Verfahren nach einem der Ansprüche 11 oder 12, wobei die Ausführung des prozessorausführbaren Programmcodes ferner bewirkt, dass die Rechenvorrichtung als Reaktion auf den Empfang einer Aufforderung von einem Datenbanknutzer, eine Operation an der spaltenbasierten Datenbank auszuführen, die folgenden Schritte ausführt, wobei die Aufforderung einen Befehl zum Abrufen sämtlicher Datenaufzeichnungen, die einen Attributwert umfassen, der in der Aufforderung spezifiziert wird, aus der spaltenbasierten Datenbank umfasst (900):
- wenn eines der Kodierungswörterbücher den spezifizierten Attributwert umfasst (901):
∘ Identifizieren des Kodierungswörterbuchs, das den spezifizierten Attributwert umfasst (902),
∘ Identifizieren des entsprechenden Identifikationswerts des spezifizierten Attributwerts im entsprechenden Kodierungseintrag des identifizierten Kodierungswörterbuchs (903),
∘ Identifizieren sämtlicher Attributvektoren, deren Attributwerte unter Verwendung des identifizierten Kodierungswörterbuchs kodiert sind und die den entsprechenden Identifikationswert umfassen (904), und
∘ Identifizieren sämtlicher Zugriffsschlüssel des entsprechenden identifizierten Identifikationswerts in sämtlichen identifizierten Anschluss-Attributvektoren (905),
- andernfalls
∘ Identifizieren sämtlicher Attributvektoren, die den spezifizierten Attributwert umfassen, und sämtlicher Zugriffsschlüssel des spezifizierten Datenwerts in sämtlichen identifizierten Attributvektoren, die den spezifizierten Attributwert umfassen (906);
▪ für jeden von den identifizierten Zugriffsschlüsseln: Identifizieren der entsprechenden Datenaufzeichnung und sämtlicher Attributwerte der entsprechenden Datenaufzeichnung, die den jeweiligen identifizierten Zugriffsschlüssel aufweist, wobei dann, wenn die entsprechende identifizierte Datenaufzeichnung einen oder mehrere von den identifizierten Attributwerten umfasst, die von einem oder mehreren von den entsprechenden Kodierungswörterbücher kodiert werden, der eine oder die mehreren von den kodierten Attributwerten der entsprechenden Datenaufzeichnung unter Verwendung eines oder mehrerer der entsprechenden Dekodierungswörterbücher dekodiert wird bzw. werden (907); und
▪ Senden sämtlicher identifizierter Datenaufzeichnungen und ihrer Attributwerte an den Datenbanknutzer (908).

14. Computerimplementiertes Verfahren nach einem der Ansprüche 11-13, wobei die Ausführung des prozessorausführbaren Programmcodes ferner bewirkt, dass die Rechenvorrichtung als Reaktion auf den Empfang einer Aufforderung von einem Datenbanknutzer, eine Operation an der spaltenbasierten Datenbank auszuführen, die folgenden Schritte ausführt, wobei die Aufforderung einen Befehl zum Löschen sämtlicher Datenaufzeichnungen, die einen Attributwert umfassen, der in der Aufforderung spezifiziert wird, in der spaltenbasierten Datenbank umfasst:
- wenn eines der Kodierungswörterbücher den spezifizierten Attributwert (921) umfasst:
∘ Identifizieren des Kodierungswörterbuchs, das den spezifizierten Attributwert umfasst (922),
∘ Identifizieren des entsprechenden Identifikationswerts des spezifizierten Attributwerts im entsprechenden Kodierungseintrag des identifizierten Kodierungswörterbuchs (923),
∘ Identifizieren sämtlicher Attributvektoren, deren Attributwerte unter Verwendung des identifizierten Kodierungswörterbuchs kodiert sind und die den entsprechenden Identifikationswert umfassen (924), und
∘ Identifizieren sämtlicher Zugriffsschlüssel des entsprechenden identifizierten Identifikationswerts in sämtlichen entsprechenden Attributvektoren (925);
- andernfalls (921)
∘ Identifizieren sämtlicher Attributvektoren, die den spezifizierten Attributwert umfassen, und sämtlicher Zugriffsschlüssel des spezifizierten Datenwerts in sämtlichen identifizierten Attributvektoren, die den spezifizierten Attributwert umfassen (927); und
▪ für jeden von den identifizierten Zugriffsschlüsseln: Zuweisen eines Markers zur entsprechenden Datenaufzeichnung und zu sämtlichen entweder kodierten oder uncodierten Attributwerten der entsprechenden Datenaufzeichnung, die den jeweiligen identifizierten Zugriffsschlüssel aufweist, wobei die Zuweisung des Markers zu entweder der Datenaufzeichnung oder dem Attributwert oder dem Identifikationswert angibt, dass er bzw. sie von der Verarbeitung ausgeschlossen ist, wenn die Aufforderungen von Datenbanknutzern zur Ausführung einer Operation an der spaltenbasierten Datenbank ausgeführt werden (928).

15. Computerlesbares Medium, auf dem ein computerausführbarer Programmcode zur Ausführung durch einen Computerprozessor gespeichert ist, welcher eine Rechenvorrichtung eines In-Memory-Datenbanksystems steuert, wobei die Ausführung der Anweisungen des ausführbaren Programmcodes bewirkt, dass der Computerprozessor die Rechenvorrichtung so steuert, dass diese das computerimplementierte Verfahren der Ansprüche 11-14 am In-Memory-Datenbanksystem ausführt.

## Revendications

1. Système de base de données en mémoire (100) comprenant :
une base de données orientée colonnes (132) pour le stockage d'enregistrements de données (215) comprenant des valeurs d'attributs (212) d'attributs (211), la base de données orientée colonnes étant stockée dans une mémoire principale (130) du système de base de données en mémoire,
un moyen de stockage numérique (150) stockant un code de programme exécutable par processeur, et
un dispositif informatique (160) pour exécuter le code de programme exécutable par processeur afin de faire en sorte que le dispositif informatique exécute les étapes suivantes de :
▪ stockage, pour chacun des attributs, des valeurs d'attribut de chacun des attributs sous la forme d'un vecteur d'attribut (213) dans la base de données orientée colonnes, où des positions des valeurs d'attribut dans le vecteur d'attribut sont indicatives de leurs clés d'accès (214) respectives, où chacun des enregistrements de données comprend les valeurs d'attribut qui ont la même clé d'accès, où chacun des vecteurs d'attribut est stocké sous la forme d'un enregistrement de données contigües séparé dans la mémoire principale, où au moins quelques uns des vecteurs d'attribut sont stockés encodés dans la base de données orientée colonnes, où chacun des vecteurs d'attribut encodé est encodé en utilisant un dictionnaire d'encodage (340) respectif, où chacun des dictionnaires d'encodage (340) comprend des enregistrements de codage (330), où chacun des enregistrements de codage comprend la valeur d'attribut et une valeur d'identification de la valeur d'attribut de chacun des enregistrements d'encodage, où les valeurs d'identification sont stockées dans les vecteurs d'attribut encodés à la place de leurs valeurs d'attributs (990) respectives ; et
▪ stockage des dictionnaires d'encodage (340) dans la mémoire principale, où les entrées de codage dans les dictionnaires d'encodage sont classées en fonction de leurs valeurs d'attribut (991) ;
**caractérisé par** :
▪ le stockage de dictionnaires de décodage (320) dans la mémoire principale, où chacun des dictionnaires d'encodage a le dictionnaire de décodage complémentaire comprenant les mêmes entrées de codage que chacun des dictionnaires d'encodage, où les entrées de codage dans les dictionnaires de décodage sont classées en fonction de leurs valeurs d'identification (992) ;
où l'exécution du code de programme exécutable par processeur, en outre, fait en sorte que le dispositif informatique exécute les étapes suivantes en réponse à la réception, par le dispositif informatique, d'une demande pour exécuter une opération sur la base de données orientée colonnes à partir d'un utilisateur de base de données, où la demande comprend une instruction pour ajouter un nouvel enregistrement de données à la base de données orientée colonnes (940) :
▪ identification de valeurs d'attributs concordant avec des attributs du nouvel enregistrement de données et des vecteurs d'attribut (941) ;
▪ identification des vecteurs d'attribut ayant les attributs identifiés, où chacune des valeurs d'attribut du nouvel enregistrement de données doit être annexée au vecteur d'attribut (942) identifié respectif ;
- si l'un des dictionnaires d'encodage est utilisé pour l'encodage de l'un des vecteurs d'attribut identifiés pour lequel une des valeurs d'attribut du nouvel enregistrement doit être annexée (943) :
∘ si l'un des dictionnaires d'encodage ne comprend pas une entrée de codage comprenant la valeur d'identification de l'une des valeurs d'attribut et l'une des valeurs d'attribut (944), l'annexion de l'un des dictionnaires d'encodage et du dictionnaire de décodage complémentaire de l'un des dictionnaires d'encodage de l'entrée de codage comprenant la valeur d'identification de l'une des valeurs d'attribut et l'une des valeurs d'attribut, où la valeur d'identification de l'une des valeurs d'attribut est unique pour le dictionnaire d'encodage entier auquel elle est annexée (945), autrement, l'identification de l'une des valeurs d'attribut dans l'entrée de codage respective de l'un des dictionnaires d'encodage ; et
∘ l'annexion de la valeur d'identification de l'une des valeurs d'attribut à l'un des vecteurs d'attribut identifié (946) ;
- autrement (943)
∘ l'annexion de l'une des valeurs d'attribut à l'un des vecteurs d'attribut identifiés (948).

2. Système de base de données en mémoire selon la revendication 1, dans lequel les attributs ont des types de données annexées étant indicatrices d'un type de données des valeurs d'attribut du vecteur d'attribut respectif, où au moins certains des vecteurs d'attribut encodés comprenant les valeurs d'attribut encodées des attributs auxquels le même type de données est associé, sont encodés en utilisant le même dictionnaire d'encodage.

3. Système de base de données en mémoire selon l'une quelconque des revendications précédentes, dans lequel l'exécution du code de programme exécutable par processeur, en outre, fait en sorte que le dispositif informatique exécute les étapes suivantes en réponse à la réception, par le dispositif informatique, d'une demande pour exécuter une opération dans la base de données orientée colonnes à partir d'un utilisateur de base de données, où la demande comprend une instruction pour retrouver à partir de la base de données orientée colonnes tous les enregistrements de données comprenant une valeur d'attribut spécifiée dans la demande (900) :
- si l'un des dictionnaires d'encodage comprend la valeur d'attribut spécifiée (901) :
∘ l'identification du dictionnaire d'encodage comprenant la valeur d'attribut spécifiée (902),
∘ l'identification de la valeur d'identification respective de la valeur d'attribut spécifiée dans l'entrée de codage respective du dictionnaire d'encodage identifié (903),
∘ l'identification de tous les vecteurs d'attribut, lesquelles valeurs d'attribut sont encodées en utilisant le dictionnaire d'encodage identifié et comprenant la valeur d'identification respective identifiée (904), et
∘ l'identification de toutes les clés d'accès de la valeur d'identification respective identifiée dans tous les vecteurs d'attribut contigus identifiés (905),
- autrement
∘ l'identification de tous les vecteurs d'attribut comprenant la valeur d'attribut spécifiée et de toutes les clés d'accès de la valeur de donnée spécifiée dans tous les vecteurs d'attribut identifiés comprenant la valeur d'attribut spécifiée (906) ;
▪ l'identification, pour chacune des clés d'accès identifiées, de l'enregistrement de données respectif et de toutes les valeurs d'attribut dudit enregistrement de données respectif ayant chacune des clés d'accès identifiées, où, si ledit enregistrement de données respectif identifié comprend une ou plusieurs des valeurs d'attribut identifiées encodées par un ou plusieurs des dictionnaires d'encodage respectifs, alors, la ou les valeurs d'attribut encodées dudit enregistrement de données respectif sont décodées en utilisant un ou plusieurs parmi les dictionnaires de décodage respectifs (907) ; et
▪ l'envoi vers l'utilisateur de la base de données de tous les enregistrements de données identifiés et de leurs valeurs d'attribut (908).

4. Système de base de données en mémoire selon l'une quelconque des revendications précédentes, dans lequel l'exécution du code de programme exécutable par processeur, en outre, fait en sorte que le dispositif informatique exécute les étapes suivantes en réponse à la réception, par le dispositif informatique, d'une demande pour exécuter une opération dans la base de données orientée colonnes à partir d'un utilisateur de base de données, où la demande comprend une instruction pour effacer, dans la base de données orientée colonnes, tous les enregistrements de données comprenant une valeur d'attribut spécifiée dans la demande (920) :
- si l'un des dictionnaires d'encodage comprend la valeur d'attribut spécifiée (921):
∘ l'identification du dictionnaire d'encodage comprenant la valeur d'attribut spécifiée (922),
∘ l'identification de la valeur d'identification respective de la valeur d'attribut spécifiée dans l'entrée de codage respective du dictionnaire d'encodage identifié (923),
∘ l'identification de tous les vecteurs d'attribut, lesquelles valeurs d'attribut sont encodées en utilisant le dictionnaire d'encodage identifié et comprenant la valeur d'identification respective identifiée (924), et
∘ l'identification de toutes les clés d'accès de la valeur d'identification respective identifiée dans tous les vecteurs d'attribut respectifs (925),
- autrement (921)
∘ l'identification de tous les vecteurs d'attribut comprenant la valeur d'attribut spécifiée et de toutes les clés d'accès de la valeur de donnée spécifiée des vecteurs d'attribut identifiés comprenant la valeur d'attribut spécifiée (927) ; et
▪ l'attribution d'un marqueur, pour chacune des clés d'accès identifiées, à l'enregistrement de données respectif et à toutes les valeurs d'attribut soit encodées, soit non encodées, dudit enregistrement de données respectif ayant chacune des clés d'accès identifiées, l'attribution du marqueur soit à l'enregistrement de données, soit à la valeur de données, soit à la valeur d'identification étant indicatrice qu'il est exclus du processus lorsque les demandes pour exécuter une opération sur la base de données orientée colonnes sont exécutées à partir des utilisateurs de base de données sont exécutées (928).

5. Système de base de données en mémoire selon la revendication 4, dans lequel l'exécution du code de programme exécutable par processeur, en outre, fait que le dispositif informatique exécute l'étape suivante après l'identification de la valeur d'identification respective de la valeur d'attribut spécifiée dans l'entrée de codage respective du dictionnaire d'encodage identifié :
∘ effacement de l'entrée de codage comprenant la valeur d'attribut spécifiée dans le dictionnaire d'encodage identifié et dans le dictionnaire de décodage complémentaire du dictionnaire d'encodage identifié (926).

6. Système de base de données en mémoire selon l'une des revendications précédentes 4 ou 5, dans lequel l'exécution du code de programme exécutable par processeur, en outre, fait que le dispositif informatique exécute l'étape suivante de :
▪ purge de la base de données orientée colonnes, où la purge de la base de données orientée colonnes est exécutée (929) lorsqu'au moins l'un des critères suivants du premier ensemble est rempli :
- une quantité de valeurs d'attribut marquées est supérieure à une première valeur de seuil,
- une quantité de valeurs d'attribut marquées est supérieure à une deuxième valeur de seuil,
- une quantité de valeurs d'attribut marquées est supérieure à une troisième valeur de seuil,
- une quantité de demandes pour exécuter une opération dans la base de données orientée colonnes par unité de temps est inférieure à une quatrième valeur de seuil ;
où la purge de la base de données orientée colonnes comprend les étapes suivantes∘:
∘ d'effacement de toutes les valeurs d'attribut marquées dans le vecteur d'attribut comprenant la valeur d'attribut marquée et dans son enregistrement contigu respectif, où, après l'effacement de toutes les valeurs d'attribut marquées de manière contigüe à l'enregistrement de données contigu, dans lequel toutes les valeurs d'attribut marquées sont effacées, est maintenue ; et
∘ d'effacement de toutes les valeurs d'identification marquées dans le vecteur d'attribut comprenant la valeur d'identification marquée et dans son enregistrement contigu respectif, où, après l'effacement de toutes les valeurs d'identification marquées de manière contigüe de l'enregistrement de données contigu, dans lequel toutes les valeurs d'attribut marquées sont effacées, est maintenu.

7. Système de base de données en mémoire selon la revendication 1, dans lequel l'annexion de la valeur d'identification à l'un des vecteurs d'attribut identifié comprend les étapes suivantes de :
∘ génération d'un enregistrement de données contigu additionnel étant une continuation de l'enregistrement de données contigu utilisé pour le stockage de l'un des vecteurs d'attribut identifié si l'enregistrement de données contigu additionnel n'est pas encore généré ; et
∘ l'annexion de l'une des valeurs d'identification identifiées à l'enregistrement de données contigu additionnel ; et
où l'annexion de l'une des valeurs d'attribut à l'un des vecteurs identifiés comprend les étapes suivantes de :
∘ génération d'un autre enregistrement de données contigu additionnel étant une continuation de l'enregistrement de données contigu utilisé pour le stockage de l'un des vecteurs d'attribut identifié si l'enregistrement de données contigu additionnel n'est pas encore généré ; et
∘ l'annexion de l'une des valeurs d'identification à l'enregistrement de données contigu additionnel ;
où l'exécution du code de programme exécutable par processeur, en outre, fait en sorte que le dispositif informatique exécute l'étape suivante de :
▪ défragmentation de la base de données orientée colonnes, où la défragmentation de la base de données orientée colonnes est exécutée lorsqu'au moins un des critères suivants du second ensemble est rempli :
- une quantité de valeurs d'attribut et/ou des valeurs d'identification stockées dans l'enregistrement de données contigu additionnel est supérieure à une cinquième valeur de seuil,
- un volume de données global stocké dans l'enregistrement de données contigu additionnel est supérieur à une sixième valeur de seuil,
- une quantité de demandes pour exécuter une opération dans la base de données orientée colonnes est inférieure à une septième valeur de seuil ;
où la défragmentation de la base de données orientée colonnes comprend l'étape suivante :
∘ d'annexion de l'enregistrement des données contigu additionnel étant la continuation de l'enregistrement des données contigu respectif dudit enregistrement de données contigu respectif.

8. Système de base de données en mémoire selon les revendications 7 et 6, dans lequel la défragmentation de la base de données orientée colonnes et la réalisation de la purge de la base de données orientée colonnes sont exécutées simultanément, lorsqu'au moins l'un des critères du premier ensemble ou du second ensemble est rempli, où, si l'étape de l'annexion de l'enregistrement de données contigu additionnel et l'étape de l'effacement de toutes les valeurs d'attribut marquées ou de toutes les valeurs d'identification marquées doivent être exécutés sur le même enregistrement de données contigu, lorsque la défragmentation de la base de données orientée colonnes et la purge de la base de données orientée colonnes sont exécutées simultanément, alors l'une de ces étapes est exécutée immédiatement après l'autre de ces étapes.

9. Système de base de données en mémoire selon l'une des revendications 1 ou 7, dans lequel les valeurs d'identification sont des nombres entiers non négatifs, où l'annexion à l'un des dictionnaires d'encodage et au dictionnaire de décodage complémentaire de l'un des dictionnaires d'encodage de l'entrée de codage comprenant la valeur d'identification de l'une des valeurs d'attribut et l'une des valeurs d'attribut (945) comprend les étapes suivantes
∘ d'attribution d'une valeur à la valeur d'identification de l'une des valeurs d'attribut, où la valeur attribuée est le nombre le moins admissible (690) ;
où l'exécution du code de programme exécutable par processeur, en outre, fait en sorte que le dispositif informatique exécute les étapes suivantes après l'annexion à l'un des dictionnaires d'encodage et au dictionnaire de décodage complémentaire de l'un des dictionnaires d'encodage de l'entrée de codage comprenant la valeur d'identification de l'une des valeurs d'attribut et l'une des valeurs d'attribut :
∘ de tri des entrées de codage dans l'un des dictionnaires d'encodage en fonction de leurs valeurs d'attribut (962) ; et
∘ de tri des entrées de codage dans le dictionnaire de décodage complémentaire de l'un des dictionnaires d'encodage en fonction de leurs valeurs d'identification, si la valeur attribuée n'est pas supérieure à une quelconque valeur d'identification dans l'un des dictionnaires d'encodage et du dictionnaire de décodage complémentaire de l'un des dictionnaires d'encodage avant l'annexion à ceux-ci de l'entrée de codage comprenant la valeur d'identification de l'une des valeurs d'attribut et l'une des valeurs d'attribut (963).

10. Système de base de données en mémoire selon l'une des revendications 1 ou 7, dans lequel les valeurs d'identification sont des nombres entiers non négatifs, où l'annexion à l'un des dictionnaires d'encodage et au dictionnaire de décodage complémentaire de l'un des dictionnaires d'encodage de l'entrée de codage comprenant la valeur d'identification de l'une des valeurs d'attribut et l'une des valeurs d'attribut (945), comprend les étapes suivantes :
∘ d'attribution d'une valeur à la valeur d'identification de l'une des valeurs d'attribut, où la valeur attribuée est supérieure à l'une quelconque des valeurs d'identification dans l'un des dictionnaires d'encodage et dans le dictionnaire de décodage complémentaire de l'un des dictionnaires d'encodage avant l'annexion à ceux-ci de l'entrée de codage comprenant la valeur d'identification de l'une des valeurs d'attribut et l'une des valeurs d'attribut (970) ;
où l'exécution du code de programme exécutable par processeur, en outre, fait en sorte que le dispositif informatique exécute l'étape suivante après l'annexion à l'un des dictionnaires d'encodage et au dictionnaire de décodage complémentaire de l'un des dictionnaires d'encodage de l'entrée de codage comprenant la valeur d'identification de l'une des valeurs d'attribut et l'une des valeurs d'attribut :
∘ le tri des entrées de codage dans l'un des dictionnaires d'encodage en fonction de leurs valeurs d'attribut (971).

11. Procédé mis en oeuvre par ordinateur pour faire fonctionner un système de base de données en mémoire (100), la base de données en mémoire comprenant :
une base de données orientée colonnes (132) pour le stockage d'enregistrements de données (215) comprenant des valeurs d'attributs (212) d'attributs (211), la base de données orientée colonnes étant stockée dans une mémoire principale (130) du système de base de données en mémoire ;
un moyen de stockage numérique (150) stockant le code de programme exécutable par processeur ; et
un dispositif informatique (160) pour exécuter le code de programme exécutable par processeur afin de faire en sorte que le dispositif informatique exécute le procédé mis en oeuvre par ordinateur, le procédé mis en oeuvre par ordinateur comprenant les étapes suivantes de :
▪ stockage, pour chacun des attributs, des valeurs d'attribut de chacun des attributs sous la forme d'un vecteur d'attribut (213) dans la base de données orientée colonnes, où des positions des valeurs d'attribut dans le vecteur d'attribut sont indicatives de leurs clés d'accès (214) respectives, où chacun des enregistrements de données comprend les valeurs d'attribut qui ont la même clé d'accès, où chacun des vecteurs d'attribut est stocké sous la forme d'un enregistrement de données contigu séparé dans la mémoire principale, où au moins quelques uns des vecteurs d'attribut sont stockés encodés dans la base de données orientée colonnes, où chacun des vecteurs d'attribut encodé est encodé en utilisant un dictionnaire d'encodage (340) respectif, où chacun des dictionnaires d'encodage comprend des enregistrements de codage (330), où chacun des enregistrements de codage comprend la valeur d'attribut et une valeur d'identification de la valeur d'attribut de chacun des enregistrements d'encodage, où les valeurs d'identification sont stockées dans les vecteurs d'attribut encodés à la place de leurs valeurs d'attributs respectives (990) ;
▪ stockage des dictionnaires d'encodage (340) dans la mémoire principale, où les entrées de codage dans les dictionnaires d'encodage sont classées en fonction de leurs valeurs d'attribut (991) ; et
▪ stockage de dictionnaires de décodage (320) dans la mémoire principale, où chacun des dictionnaires d'encodage a le dictionnaire de décodage complémentaire comprenant les mêmes entrées de codage que chacun des dictionnaires d'encodage, où les entrées de codage dans les dictionnaires de décodage sont classées en fonction de leurs valeurs d'identification (992) ; où l'exécution du code de programme exécutable par processeur, en outre, fait en sorte que le dispositif informatique exécute les étapes suivantes du procédé mis en oeuvre par ordinateur en réponse à la réception, par le dispositif informatique, d'une demande pour exécuter une opération sur la base de données orientée colonnes à partir d'un utilisateur de base de données, où la demande comprend une instruction pour ajouter un nouvel enregistrement de données à la base de données orientée colonnes (940) :
▪ d'identification de valeurs d'attributs concordant avec des attributs du nouvel enregistrement de données et des vecteurs d'attribut (941) ;
▪ d'identification des vecteurs d'attribut ayant les attributs identifiés, où chacune des valeurs d'attribut des nouveaux enregistrements de données doit être annexée au vecteur d'attribut (942) identifié respectif ;
- si l'un des dictionnaires d'encodage est utilisé pour l'encodage de l'un des vecteurs d'attribut identifiés pour lequel une des valeurs d'attribut du nouvel enregistrement doit être annexée (943) :
∘ si l'un des dictionnaires d'encodage ne comprend pas une entrée de codage comprenant la valeur d'identification de l'une des valeurs d'attribut et l'une des valeurs d'attribut (944), l'annexion à l'un des dictionnaires d'encodage et au dictionnaire de décodage complémentaire de l'un des dictionnaires d'encodage, l'une entrée de codage comprenant la valeur d'identification de l'une des valeurs d'attribut et l'une des valeurs d'attribut, où la valeur d'identification de l'une des valeurs d'attribut est unique pour le dictionnaire d'encodage entier auquel elle est annexée (945), autrement l'identification de la valeur d'identification de l'une des valeurs d'attributs dans l'entrée de codage respective de l'un des dictionnaires d'encodage ; et
∘ l'annexion de la valeur d'identification à l'une des valeurs d'attribut de l'un des vecteurs d'attribut identifié (946) ;
- autrement (943)
∘ l'annexion de l'une des valeurs d'attribut à l'un des vecteurs d'attribut identifiés (948).

12. Procédé mis en oeuvre par ordinateur selon la revendication 11, dans lequel dans lequel les valeurs d'identification sont des nombres entiers non négatifs, où l'annexion à l'un des dictionnaires d'encodage et au dictionnaire de décodage complémentaire de l'un des dictionnaires d'encodage de l'entrée de codage comprenant la valeur d'identification de l'une des valeurs d'attribut et l'une des valeurs d'attribut (945) comprend l'étape :
∘ d'attribution d'une valeur à la valeur d'identification de l'une des valeurs d'attribut, où la valeur attribuée est le nombre le moins admissible (960) ;
où l'exécution du code de programme exécutable par processeur, en outre, fait en sorte que le dispositif informatique exécute les étapes suivantes du procédé mis en oeuvre par ordinateur après l'annexion à l'un des dictionnaires d'encodage et au dictionnaire de décodage complémentaire de l'un des dictionnaires d'encodage de l'entrée de codage comprenant la valeur d'identification de l'une des valeurs d'attribut et l'une des valeurs d'attribut :
∘ de tri des entrées de codage dans l'un des dictionnaires d'encodage en fonction de leurs valeurs d'attribut (962) ; et
∘ de tri des entrées de codage dans le dictionnaire de décodage complémentaire de l'un des dictionnaires d'encodage en fonction de leurs valeurs d'identification, si la valeur attribuée n'est pas supérieure à une quelconque valeur d'identification dans l'un des dictionnaires d'encodage et dans le dictionnaire de décodage complémentaire de l'un des dictionnaires d'encodage avant l'annexion à ceux-ci de l'entrée de codage comprenant la valeur d'identification de l'une des valeurs d'attribut et l'une des valeurs d'attribut (963).

13. Procédé mis en oeuvre par ordinateur selon l'une des revendications 11 ou 12, dans lequel l'exécution du code de programme exécutable par processeur, en outre, fait en sorte que le dispositif informatique exécute les étapes suivantes en réponse à la réception, par le dispositif informatique, d'une demande pour exécuter une opération dans la base de données orientée colonnes à partir d'un utilisateur de base de données, où la demande comprend une instruction pour retrouver à partir de la base de données orientée colonnes tous les enregistrements de données comprenant une valeur d'attribut spécifiée dans la demande (900) :
- si l'un des dictionnaires d'encodage comprend la valeur d'attribut spécifiée (901) :
∘ d'identification du dictionnaire d'encodage comprenant la valeur d'attribut spécifiée (902),
∘ d'identification de la valeur d'identification respective de la valeur d'attribut spécifiée dans l'entrée de codage respective du dictionnaire d'encodage identifié (903),
∘ d'identification de tous les vecteurs d'attribut, lesquelles valeurs d'attribut sont encodées en utilisant le dictionnaire d'encodage identifié et comprenant la valeur d'identification respective identifiée (904), et
∘ d'identification de toutes les clés d'accès de la valeur d'identification respective identifiée dans tous les vecteurs d'attribut contigus identifiés (905),
- autrement
∘ l'identification de tous les vecteurs d'attribut comprenant la valeur d'attribut spécifiée et de toutes les clés d'accès de la valeur de donnée spécifiée des vecteurs d'attribut identifiés comprenant la valeur d'attribut spécifiée (906) ;
▪ l'identification, pour chacune des clés d'accès identifiées, de l'enregistrement de données respectif et de toutes les valeurs d'attribut dudit enregistrement de données respectif ayant chacune des clés d'accès identifiées, où, si ledit enregistrement de données respectif identifié comprend une ou plusieurs des valeurs d'attribut identifiées par un ou plusieurs des dictionnaires d'encodage respectifs, alors, la ou les valeurs d'attribut encodées dudit enregistrement de données respectif sont décodées en utilisant un ou plusieurs parmi les dictionnaires de décodage respectifs (907) ; et
▪ l'envoi vers l'utilisateur de la base de données de tous les enregistrements de données identifiés et de leurs valeurs d'attribut (908).

14. Procédé mis en oeuvre par ordinateur selon l'une des revendications 11 à 13, dans lequel l'exécution du code de programme exécutable par processeur, en outre, fait en sorte que le dispositif informatique exécute les étapes suivantes en réponse à la réception, par le dispositif informatique, d'une demande pour exécuter une opération dans la base de données orientée colonnes à partir d'un utilisateur de base de données, où la demande comprend une instruction pour effacer dans la base de données orientée colonnes tous les enregistrements de données comprenant une valeur d'attribut spécifiée dans la demande (920) :
- si l'un des dictionnaires d'encodage comprend la valeur d'attribut spécifiée (921) :
∘ d'identification du dictionnaire d'encodage comprenant la valeur d'attribut spécifiée (922),
∘ d'identification de la valeur d'identification respective de la valeur d'attribut spécifiée dans l'entrée de codage respective du dictionnaire d'encodage identifié (923),
∘ d'identification de tous les vecteurs d'attribut, lesquelles valeurs d'attribut sont encodées en utilisant le dictionnaire d'encodage identifié et comprenant la valeur d'identification respective identifiée (924), et
∘ d'identification de toutes les clés d'accès de la valeur d'identification respective identifiée dans tous les vecteurs d'attribut respectifs (925),
- autrement (921)
∘ d'identification de tous les vecteurs d'attribut comprenant la valeur d'attribut spécifiée et de toutes les clés d'accès de la valeur de donnée spécifiée dans tous les vecteurs d'attribut identifiés comprenant la valeur d'attribut spécifiée (927) ; et
▪ l'attribution d'un marqueur, pour chacune des clés d'accès identifiées, à l'enregistrement de données respectif et à toutes les valeurs d'attribut soit encodées, soit non encodées, dudit enregistrement de données respectif ayant chacune des clés d'accès identifiées, l'attribution du marqueur soit à l'enregistrement de données, soit à la valeur de données, soit à la valeur d'identification étant indicatrice qu'il est exclus du processus lorsque les demandes pour exécuter une opération sur la base de données orientée colonnes sont exécutées à partir des utilisateurs de base de données (928).

15. Support lisible par ordinateur ayant un code de programme exécutable par ordinateur y étant stocké, pour l'exécution par un processeur d'ordinateur contrôlant un dispositif informatique dans un système de base de données en mémoire, où l'exécution des instructions du code de programme exécutable fait que le processeur d'ordinateur contrôlant le dispositif informatique exécute le procédé mis en oeuvre par ordinateur selon les revendications 11 à 14 sur le système de base de données en mémoire.
